(19) **Europäisches Patentamt European Patent Office Office européen des brevets**

(11) **EP 3 502 711 B1**

(12) **EUROPEAN PATENT SPECIFICATION**

(45) Date of publication and mention of the grant of the patent:
**25.08.2021 Bulletin 2021/34**

(51) Int Cl.:
**G05D 23/19** (2006.01)     **G02B 7/00** (2021.01)

(21) Application number: **17209737.0**

(22) Date of filing: **21.12.2017**

(54) **METHOD FOR THERMOMECHANICALLY STABILIZING AN APPARATUS, CONTROL UNIT, THERMOMECHANICAL CONTROL SYSTEM, AND APPARATUS**

**VERFAHREN ZUR THERMOMECHANISCHEN STABILISIERUNG EINER VORRICHTUNG, STEUERUNGSEINHEIT, THERMOMECHANISCHES STEUERUNGSSYSTEM UND VORRICHTUNG**

**PROCÉDÉ DE STABILISATION THERMOMÉCANIQUE D'UN APPAREIL, UNITÉ DE COMMANDE, SYSTÈME DE COMMANDE THERMOMÉCANIQUE ET APPAREIL**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietor: **Universität der Bundeswehr München 85579 Neubiberg (DE)**

(72) Inventors:
- **FÖRSTNER, Roger 81739 München (DE)**
- **FERRER-GIL, Eloi 17005 Girona (ES)**

(74) Representative: **Hoefer & Partner Patentanwälte mbB Pilgersheimer Straße 20 81543 München (DE)**

(56) References cited:
**EP-A1- 2 343 586**     **WO-A2-2005/053045**
**US-A1- 2017 242 048**

**Description**

The present invention refers to a method for thermomechanically stabilizing an apparatus, to a control unit for a thermomechanical control system, to a thermomechanical control system, and to an apparatus and in particular to an extraterrestrial or space-related manufacturing, measurement and/or experimental unit.

When using technical equipment, scientific instruments and/or other technical means in extraterrestrial and space-related environment - for instance on a satellite platform - thermomechanical stabilization of the equipment is a crucial aspect in order to guarantee a high degree of performance of the equipment's desired functions.

Nowadays, a large effort has to be practiced in order to achieve a desired thermomechanical stabilization. However, known attempts are majorly based on passive approaches, wherein e.g. the structure of the equipment is enforced by using high performance materials having low coefficients of thermal expansion and/or efforts are taken in order to thermally uncouple the equipment to be stabilized from other parts of a spacecraft or the like.

Prior art document EP 2 343 586 A1 discloses a shape stabilized mirror module comprising a reflective element, a supporting base element attached to the reflective element, and a heat exchange element for transferring heat to and/or from the mirror module. The mirror module further comprises a heat pump, for example a Peltier element, for transferring heat between the reflective element and the heat exchange element, more in particular for cooling the reflective element. The document also relates to a method to stabilize a mirror module characterised in that a heat flow is measured to stabilise the shape of a reflective element.

As such approaches are limited on a particular design and therefore need continuous calibration also in order to deal with changing environmental conditions, it is an object underlying the present invention to present a method for thermomechanically stabilizing an apparatus, a control unit for a thermomechanical control system, a thermomechanical control system and an apparatus which are configured in order to allow a more flexible and reliable thermomechanical stabilization without increasing the burden for its realization.

The object underlying the present invention is achieved by a method for thermomechanically stabilizing an apparatus according to independent claim 1, by a control unit for a thermomechanical control system according to claim 11, by a thermomechanical control system according to claim 12 and by an apparatus and in particular by an extraterrestrial or space related manufacturing, measurement, and/or experimental unit according to claim 13. Preferred embodiments are defined in the respective dependent claims

According to a first aspect of the present invention a method for actively thermomechanically stabilizing an apparatus is suggested, wherein the apparatus in particular is or comprises an extraterrestrial or space-related manufacturing, measurement and/or experimental unit.

According to the present invention the proposed method comprises steps of determining a current thermal state of the apparatus, of determining a current mechanical state of the apparatus, of comparing said current mechanical state of the apparatus with a predetermined mechanical reference state of the apparatus, of determining one or a plurality of positions on said apparatus and/or amounts of heat to be added to or to be removed from said apparatus at said positions, and actively adding and/or removing said determined amounts of heat to or from the apparatus, respectively, at said determined positions. According to the present invention said step of determining said positions and/or amounts of heat is performed such that said current mechanical state of the apparatus remains in or returns to a predetermined vicinity of said mechanical reference state of the apparatus and said step is based on a result of said step of comparing and on a predetermined thermomechanical coupling model of the apparatus which is descriptive for a coupling and/or a correspondence between a mechanical state and a thermal state of the apparatus.

It is therefore a first key aspect of the present invention to actively react upon the thermal and mechanical state of the underlying apparatus, namely by applying heat, either by adding or removing, in order to counteract an undesired development in the apparatus in the sense of its thermal and/or mechanical properties.

In addition, locations where the heat is to be applied and/or the amounts of the heat to be applied are ruled on the basis of a thermomechanical coupling model which is descriptive for the interconnection between mechanical properties and thermal properties of the apparatus.

Further on, based on the underlying model the locations and the amounts are determined in a manner such that a desired mechanical state of the apparatus remains at or approaches a desired and predetermined mechanical reference state.

The mechanical state of the apparatus may be defined by determining certain positions on the apparatus and the geometrical interrelation. Accordingly, a vicinity of a given mechanical reference state may be defined by giving certain reference positions and a maximum allowed distance of a corresponding position in a current mechanical state of the apparatus, if applicable, also in connection with a relationship to other reference points of the apparatus regarding the reference mechanical state and the current mechanical state thereof.

In general, a thermal state may be defined by different thermal properties of the underlying apparatus.

A comparable simple processing can be achieved when according to a preferred embodiment of the inventive method for actively thermomechanical stabilizing and apparatus said step of determining said current thermal state comprises a step of acquiring thermal data and in particular temperature data which are representative for said current thermal state. In particular this may be done by using one or a plurality of temperature sensing means, temperature sensors and/or infrared cameras or the like.

In general, the number and positions of the locations where the thermal data are required is arbitrary to some extent.

However a particular high degree of reliability of the inventive method can be achieved when a number and/or positions of thermal or temperature data acquiring and/or sensing locations on the apparatus are determined from said thermomechanical coupling model wherein in particular the evaluation of the underlying thermomechanical coupling model is based thermal and/or temperature data which have already been acquired, for instance in preceding processing steps.

A respective mechanical state of the underlying apparatus may be derived and described by a variety of mechanical properties the values of which to be obtained from a kind of measuring process on the apparatus and/or directly from an estimation based only on the thermomechanical model.

A particular simple and reliable embodiment of the inventive method for thermomechanical stabilizing an apparatus is achieved if said step of determining said current mechanical state comprises a step of determining mechanical data, wherein said mechanical data are representative for said current mechanical state and/or for positions and/or for mechanical stress or strain of one or a plurality of portions of the apparatus.

A further simplification is achieved by just using an underlying FEM model. If the model is used it is not necessary to perform any mechanical measurements. In other words, mechanical measurements are not necessary to implement the invention but they can be used to minimize estimation errors in the model.

Again, the data on connection with the mechanical properties of the underlying apparatus may be provided by different means.

On the one hand it is of course possible to determine a current mechanical state and its mechanical data based on measurements using one or a plurality (i) of position and/or stress sensing means or sensors mechanically coupled to the apparatus and/or (ii) imaging means and image evaluation remote from the apparatus.

On the other hand it is also required to determine a current mechanical state and its mechanical data based on the thermomechanical coupling model already introduced. Again, the evaluation of the model may be based on already acquired thermal, temperature and/or mechanical data. In particular, the acquisition and the usage mechanical data by mechanical measurements can improve the estimation that is performed by the model.

Under such circumstances, a number and/or positions of mechanical data acquiring and/or sensing locations on the apparatus may be determined from said thermomechanical coupling model, too, wherein the evaluation of the model may again be based on already acquired thermal, temperature and/or mechanical data.

In said step of adding and/or removing said amounts of heat to or from the apparatus, respectively, at least one heat source may thermally be coupled to a corresponding position at or on said apparatus and accordingly operated in order to add and/or remove the corresponding amount of heat to/from said position at least by one of heat conduction and heat radiation coupling.

This may be performed in comparable direct manner of influencing the thermal state of the underlying apparatus in case that a direct mechanical and therefore thermal contact is established between a heat source and the body of the underlying apparatus.

On the other hand, thermal coupling between the heat source and the apparatus may also be achieved by a radiation coupling in order to avoid undesired influences of the apparatus by the heat source.

A further crucial point of the present invention is the selection, construction and application of the underlying thermomechanical coupling model.

It is of particular advantage of the present invention according to a further alternative embodiment thereof if said thermomechanical coupling model is configured in order to describe heat exchange within the apparatus and/or between the apparatus and its environment at least through heat conduction and heat radiation and its temporal development as a temporarily developing thermal state of the apparatus, in particular in order to solve the heat transfer equation for the apparatus based on nodes for elements of a FEM model of the apparatus with the thus discretized heat transfer equation being solved (i) in a vicinity of a thermal equilibrium state of the apparatus, (ii) for small thermal perturbations and/or (iii) in linearized, diagonalized and Laplace transformed form in the frequency domain.

In order to better quantitatively evaluate the required properties based on said thermomechanical coupling model a first thermal transfer function $H_{T_q}$ between the temperature change $\delta T_i$ at an $i^{th}$ node and the heat flux change $\delta q_k$ at a $k^{th}$ surface according to expression (A)

$$H_{T_i q_k}(s) = \frac{\delta T_i}{\delta q_k} = \sum_{j=1}^{n_n} \phi_{ij} \frac{A_{jk}}{s + \lambda_j}$$

$$(A)$$

and a second thermal transfer function $H_{TQ}$ between the temperature change $\delta T_i$ at an $i^{th}$ node and the heat flow change $\delta Q_k$ at a $k^{th}$ source according to expression (B)

$$H_{T_i Q_k}(s) = \frac{\delta T_i}{\delta Q_k} = \sum_{j=1}^{n_n} \phi_{ij} \frac{B_{jk}}{s + \lambda_j}$$

$$(B)$$

are calculated and used.

In these expressions, the terms $A_{jk}$ denote the values at cells $j,k$ of a matrix $[\Phi]^{-1}[H_q]$, the terms $B_{jk}$ denote the value at cells $j,k$ of a matrix $[\Phi]^{-1}[H_Q]$, $n_n$ denotes the number of nodes of the underlying model, $s$ is the Laplace frequency variable.

The matrices $[\Phi]^{-1}[H_q]$ and $[\Phi]^{-1}[H_Q]$ are formed by the diagonal Eigenvector matrix $[\Phi]$ in the discretized heat transfer equation for the apparatus having components $\Phi_{ij}$ in the cell denoted by $i, j$.

The matrices $[H_q]$ and $[H_Q]$ are the matrices of coupling coefficients with respect to the heat flux changes $\delta q_k$ and to the heat source changes $\delta Q_k$, respectively, in the discretized heat transfer equation for the apparatus.

The values $\lambda_j$ are the diagonal components of the diagonal Eigenvalue matrix $\lambda$ in the discretized heat transfer equation for the apparatus.

Also in the case of providing and evaluating the mechanical properties of the underlying apparatus a variety of approaches is possible in the context of the underlying thermomechanical coupling model.

Therefore, the thermomechanical coupling model may be configured in order to describe corresponding mechanical properties within the apparatus and in particular in terms of positions, displacements and/or mechanical strains or stresses at distinct points and/or in distinct regions of the apparatus and its temporal development as a temporarily developing mechanical state of the apparatus.

This may in particular be done in order to solve the mechanical equation of motion for the apparatus based on nodes for elements of a FEM model of the apparatus with the thus discretized mechanical equation of motion being solved in diagonalized and Laplace transformed form in the frequency domain.

Under such circumstances and based on said thermomechanical coupling model a first thermomechanical transfer function $H_{uq}$ between the displacement change $\delta u_i$ at an $i^{th}$ node and the heat flux change $\delta q_l$ at a $l^{th}$ surface according to expression (C)

$$H_{u_i q_l}(s) = \frac{\delta u_i}{\delta q_l} = \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k}$$

$$(C)$$

and a second thermomechanical transfer function $H_{uQ}$ between the displacement change $\delta u_i$ at an $i^{th}$ node and the heat flow change $\delta Q_l$ at a $l^{th}$ source according to expression (D)

$$H_{u_i Q_l}(s) = \frac{\delta u_i}{\delta Q_l} = \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k}.$$

$$(D)$$

may be calculated and used.

In addition to the definitions as given above, the terms $D_{jk}$ denote the values at cells $j,k$ of a matrix $[\psi]^{-1}[F_T][\Phi]$, the terms $\xi_j$ denote the value at cells $j,k$ of a matrix $[D_d]$, the matrix $[\psi]^{-1}[F_T][\Phi]$ is formed by the diagonal Eigenvector matrix $[\psi]$ of the discretized equation of motion of the apparatus having components $\psi_{ij}$ in the cell denoted by $i, j$, the matrix $[F_T]$ is the matrix of coefficients expressing the relation between temperature and force in the discretized equation of motion of the apparatus, the diagonal Eigenvector matrix $[\varPhi]$ in the discretized heat transfer equation, the matrix $[D_d]$ is a diagonal matrix and describes the linear coupling to the Laplace frequency s in the Laplace transformed discretized equation of motion of the apparatus, and $\gamma_j$ are the diagonal components of the diagonal Eigenvalue matrix $\gamma$ in the discretized equation of motion for the apparatus.

In order to determine the position network of heat sources and/or sensors to be applied to an apparatus different kinds of optimization strategies can be employed.

For instance, according to a preferred embodiment of the method for actively thermomechanically stabilizing and apparatus, the number, the positions and/or the amounts of heat to be applied by a plurality of heat sources to be coupled to an underlying apparatus may be determined by evaluating said first and second thermomechanical transfer functions, its normal or absolute value, within a closed feedback loop and/or under variation of the positions and/or the amounts of heat to be applied.

According to a further aspect of the present invention a control unit for a thermomechanical control system is provided which is configured (i) in order to actively thermomechanically control an apparatus, the latter in particular being or comprising an extraterrestrial or space-related manufacturing, measurement and/or experimental unit, and (ii) in order to carry out a method for actively thermomechanically stabilizing an apparatus according to the present invention.

According to still a further aspect of the present invention a thermomechanical control system is provided which is configured in order to actively thermomechanically control an apparatus which in particular is or comprises an extraterrestrial or space-related manufacturing, measurement and/or experimental unit.

According to the present invention the proposed thermomechanical control system comprises one or a plurality of heat sources or a coupling thereto, an energy supply unit, and a control unit which is configured according to the present invention and/or in order to control the operation of the heat sources, of the energy supply unit and/or in order to carry out and/or to be used in a method according for actively thermomechanically stabilizing an apparatus according to the present invention.

An apparatus proposed according to the present invention is in particular formed as or comprises an extraterrestrial or space-related manufacturing, measurement and/or experimental unit.

The apparatus therefore comprises a support, at least one device mechanically coupled to the support, and a thermomechanical control system which is configured according to the present invention and/or in order to thermomechanically control the apparatus by performing a method for thermomechanically stabilizing the apparatus according to the present invention.

These and further details, advantages and features of the present invention will be described based on embodiments of the invention and by taking reference to the accompanying figures.

| | |
|---|---|
| Figure 1 | gives a schematic and perspective view of an apparatus according to the present invention; |
| Figure 2 | is a schematic view of a FEM model for the embodiment of the apparatus according to the present invention as shown in figure 1; |
| Figures 3 and 4 | elucidate by means of a schematic the guilt top view and a schematic side view, respectively, the linear dimensions of the embodiment shown in figures 1 and 2; |
| Figure 5 | shows a graph representing a typical example of heat perturbations which can be expected in an apparatus; |
| Figures 6 to 11 | demonstrate by means of perspective side views and graphs the impact of heat perturbations and the effect of countermeasures applied by means of the present invention; |
| Figures 12 to 14 | demonstrate by means of graphs displacement fluctuations which can be expected when heat perturbations occur in the embodiment shown in figure 1 in different spatial directions as well as the effect of the invention's countermeasures; |
| Figure 15 | demonstrates by means of a graph the effect of different heat sources as shown in the embodiment of figure 1, and |
| Figure 16 | elucidates by means of a flow chart and embodiment of the method according to the present invention. |

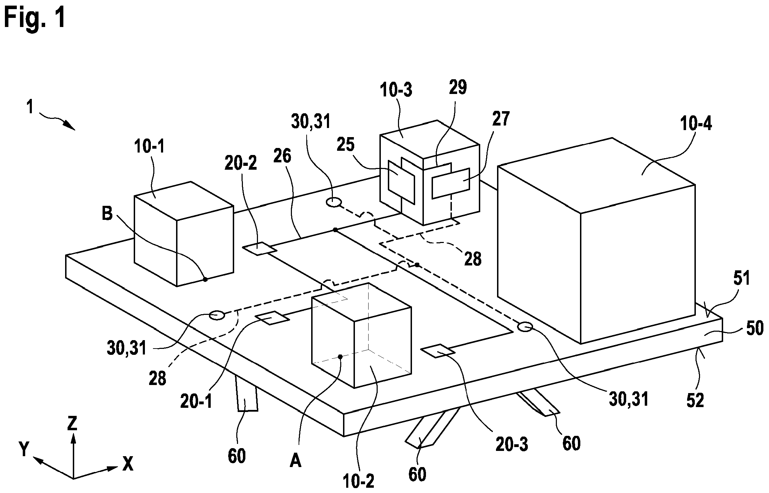

Figure 1 gives a schematic and perspective view of an apparatus 1 according to the present invention. In the sense of the present invention the apparatus 1 is also referred to as the underlying system or structure and these notions are used as synonyms in the context of the present invention.

According to the embodiment shown in figure 1 the apparatus 1 comprises a support 50 which is also referred to as a platform. The support 50 in this case is formed as a rectangular plate which extends in a plane parallel to the XY plane of the underlying reference frame. The support 50 has a lower surface or side 52 onto which bipods 60 are attached. On the opposite side of the lower surface 52 the support 50 has an upper surface 51 onto which first to fourth devices 10-1, ..., 10-4 are mounted.

During operation of the apparatus 1 all the components of the apparatus 1 - i.e. any of the devices 10-1, ..., 10-4, the support 50 and the bipods 60 - may receive and/or deliver heat from or to external sources and/or from and to any other component of the apparatus 1.

Due to changing operation and/or environmental conditions the thermal impact on the entire apparatus 1 may change thereby also changing the thermal state and - by thermomechanical coupling - also the mechanical state of the apparatus. In other words the temperature distribution or field of the apparatus as well as positions and/or mechanical strains of stresses in different regions of the apparatus may vary over time.

It is a major aspect of the present invention to provide operation conditions and/or means to control these variations such that a current and actual mechanical state of the apparatus remains in the vicinity of a mechanical reference state, e.g. such that positions of the apparatuses components do not vary too much compared to said mechanical reference state and within some predetermined subsidiary and boundary conditions.

In order to achieve this goal the apparatus 1 according to the embodiment shown in figure 1 is equipped with a plurality of heat sources 20-1, ..., 20-3 connected to a power supply unit 25 and to a control unit 27 by means of control and supply lines 26 and monitoring and control lines 29.

In the embodiment shown in figure 1 the heat sources 20-1, ..., 20-3, the power supply unit 25, which may also be referred to as an energy supply unit, the control unit 27 and the lines 26 and 29 for controlling, supplying and/or monitoring are formed as components of the apparatus 1.

However, this is not mandatory and all or a part of these components may alternatively be formed remotely from the apparatus' platform 50, bipods 60, and devices 10-1, ..., 10-4, instead.

This also applies to the provided sensing means 30, 31 and their monitoring and control lines 28 to the control unit 27.

In addition, the number, orientation and position of the heat sources 20-1, ..., 20-4, of the sensors 30, 31, and/or of all the lines 26, 28, 29 are not fixed to the properties shown in figure 1 but may be set according to a preliminary design step which also may take into account aspects derived from the thermomechanical coupling model on which embodiments of the present invention reside.

One further key aspect of the present invention focuses on the operation of the heat sources 20-1, ..., 20-4 - for heating and/or for cooling - the apparatus 1 in order to return or maintain and current and actual mechanical state of the apparatus 1 to or at/in a vicinity of the underlying mechanical reference state.

In order to achieve this goal a thermomechanical coupling model describing the relationship between a current and actual thermal state of the apparatus 1 and a current and actual mechanical state of the apparatus 1 is formed and used in order to derive the position and/or the amount of heat necessary to be intentionally applied to the apparatus 1 in order to compensate the external and/or internal thermal impact on the mechanical state of the apparatus 1, thereby returning or maintaining the current or actual mechanical state of the apparatus 1 at or in a vicinity of the underlying mechanical reference state.

An actual and current mechanical state of the apparatus 1 may be derived from alternative or combined sources, namely from the underlying thermomechanical coupling model using the current thermal state only or alternatively or additionally by introducing mechanical data in the sense of reference positions, reference lengths and/or orientations obtained by position, length and/or orientation sensors 31.

The thermal state as such and its determination are based on thermal data which may be obtained by using a plurality temperature sensors 30.

As indicated above, the sensors 30 and 31 may be attached to the apparatus 1 and its components or they may be formed as remote sensors.

For instance, the thermal state may be derived from an infrared image using an infrared camera as a thermal sensor 30. On the other hand the mechanical status might also be derived by using an imaging means as a mechanical sensor 31 in connection with a certain degree of image processing for obtaining position, length and/or orientation data in view of the apparatus 1.

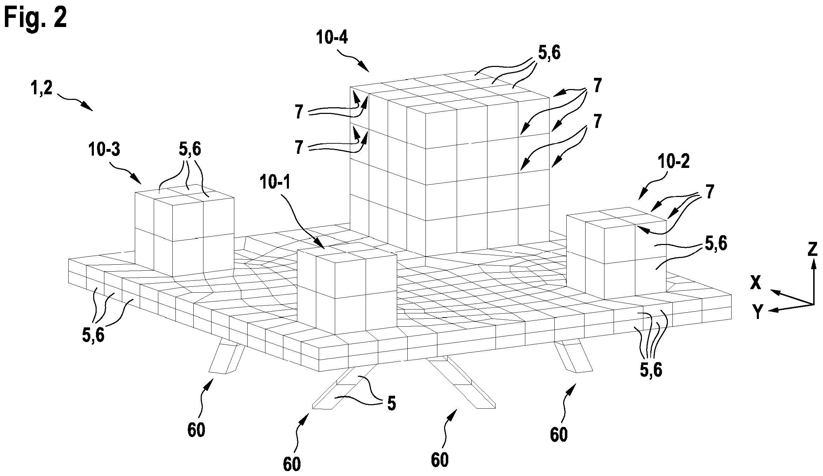

Figure 2 is a schematic view of a FEM model 2 for the embodiment of the apparatus 1 according to the present invention as shown in figure 1.

A key aspect of the FEM model 2 is to subdivide the entire structure of the apparatus 1 into a plurality of finite elements of a given geometrical shape, for instance hexahedrons, 6 as elements 5 of the model 2. The edges of the elements 5 formed as hexahedron 6 join at nodes 7 which are also referred to as points of the FEM model 2.

The elements 5 and the nodes or points 7 of the FEM model 2 are then used as the basis for deriving and applying the thermomechanical coupling model underlying the present invention which resides on the solution of the coupled heat transfer equation and equation of motion discretized according to the underlying FEM model 2 and solved in the frequency domain by accordingly applying Laplace transform.

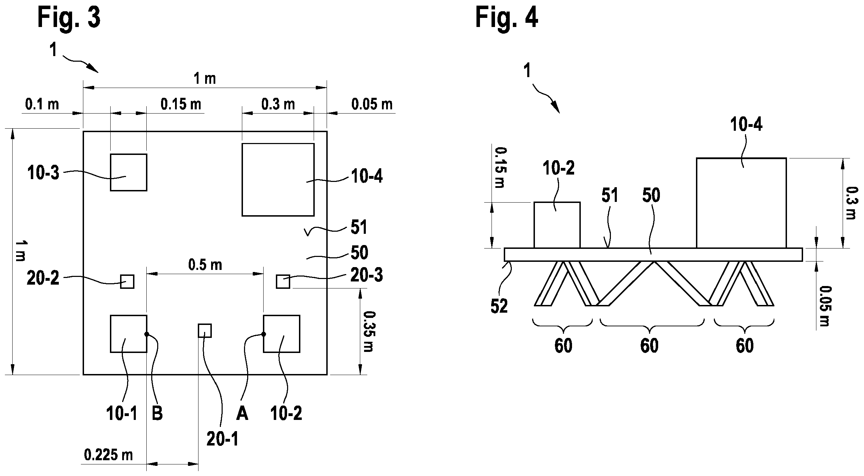

Figures 3 and 4 elucidate by means of a schematic top view and a schematic side view, respectively, examples for the linear dimensions of the embodiment of the apparatus 1 shown in figures 1 and 2.

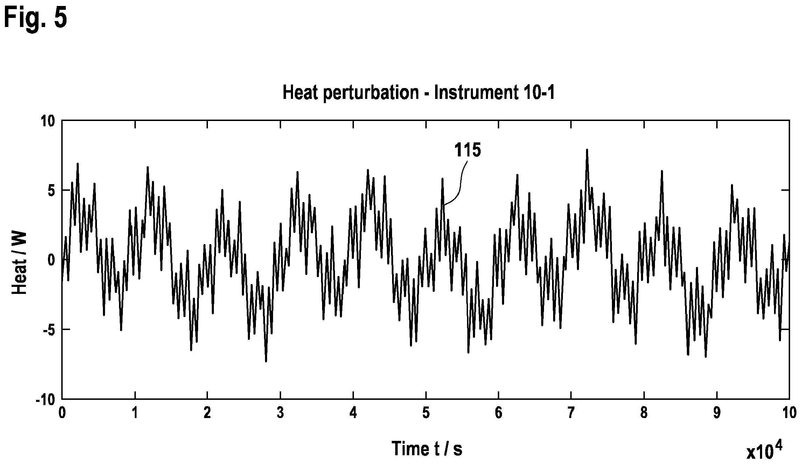

Figure 5 shows a graph representing a typical example of heat perturbations which can be expected in an apparatus 1. In the graph of figure 5 the abscissa shows that time and the ordinate the change in produced heat. Thus, the trace 115 in the graph of figure 5 shows the heat production and emission by an instrument 10-1 attached to the platform 50 of an instrument 1 and thereby a combination of random and oscillating heat production over time.

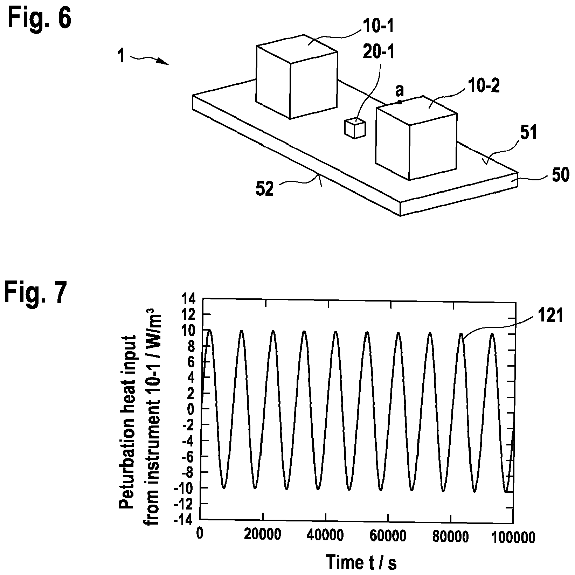

Figures 6 to 11 demonstrate by means of perspective side views and graphs the impact of heat perturbations and the effect of countermeasures applied by means of the present invention in an apparatus 1. In this embodiment the apparatus comprises two devices 10-1 and 10-2 attached to the upper surface 51 of the platform 50 and a heat source 20-1 for intentionally applying or removing heat to or from the apparatus 1 and in order to keep the position of reference point a within certain margins determined by the underlying mechanical reference state for the apparatus 1.

According to figures 6 and 7, the first instrument or device 10-1 due to its operation produces a heat input to the entire apparatus 1. The heat input is described by the trace 121 of the graph of figure 7 and shows an oscillation as far as the power as a function of time is considered.

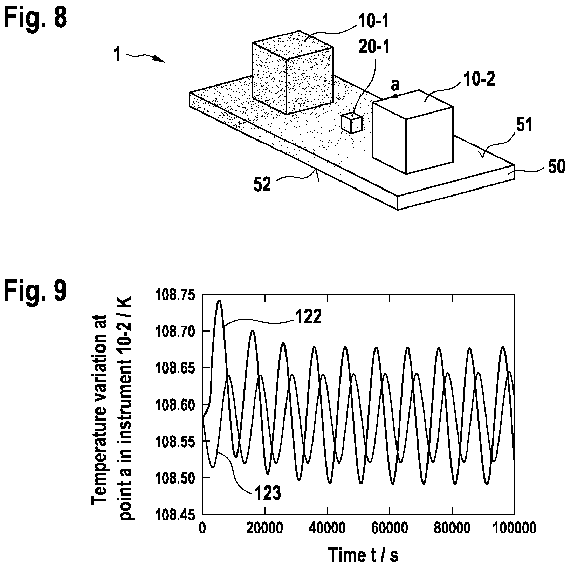

As shown in connection with the graph of figure 9, the heat input by the first instrument 10-1 yields to a spatial oscillation of the position a reference point a of the second instrument 10-2. The trace 122 of the graph of figure 9 shows the temperature oscillation of the reference point a if the apparatus 1 is only passively stabilized in the conventional manner. The trace 123 shows the temperature oscillation at the reference point a under active control of the structure of the apparatus 1 according to the present invention.

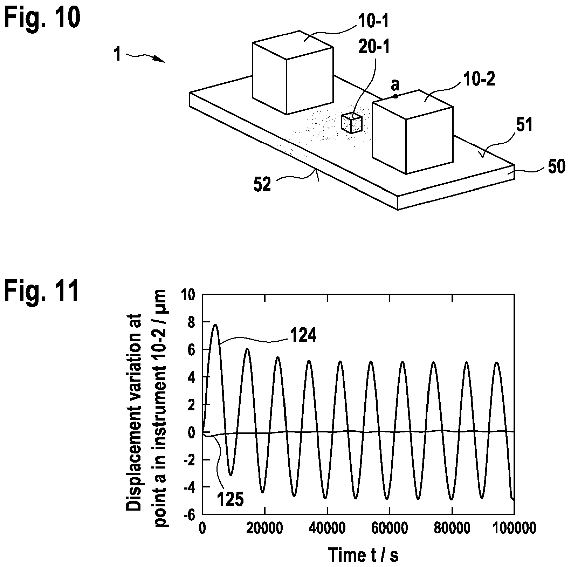

The graph of figure 11 demonstrates the spatial oscillation of reference point a as a consequence of the thermal oscillation shown in figure 9. It can be seen in trace 124 that without any countermeasure except for passive reinforcements of the structure of the apparatus 1, a spatial oscillation of reference point a remains with an amplitude of several micrometers, whereas according to trace 125 the active and intentional application of heat diminishes the spatial oscillations of reference point a.

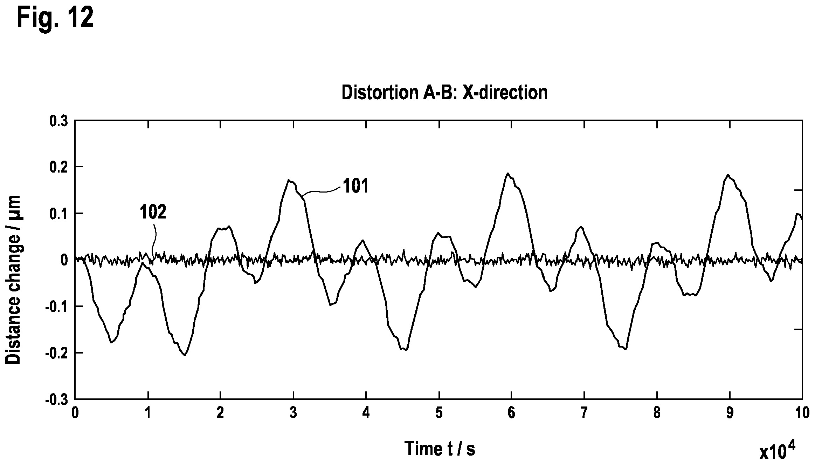

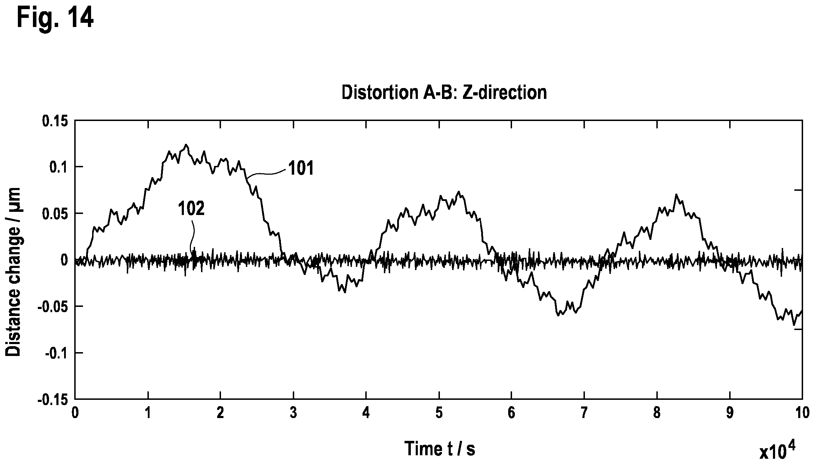

Figures 12 to 14 demonstrate by means of graphs displacement fluctuations which can be expected when heat perturbations occur in the embodiment shown in figure 1 in different spatial directions in view of reference points B and A situated on the first and second devices 10-1 and 10-2, respectively, as well as the effect of the invention's countermeasures.

Traces 101 in the graphs of figures 12 to 14 demonstrate the spatial fluctuations if no countermeasures are taken. Traces 102 in these figures elucidate the spatial fluctuations in relation to reference points A and B if heat is intentionally applied according to the gist underlying the present invention.

Figure 15 demonstrates by means of a graph the effect of the different heat sources 20-1, ..., 20-3 as shown in the embodiment of figure 1.

Figure 16 elucidates by means of a flow chart and embodiment of the method S according to the present invention.

In a preliminary phase P, from an analysis of the structure of the underlying apparatus 1 a thermomechanical coupling model for the apparatus 1 and its FEM model 2 with the discretized heat transfer equation and equation of motion Laplace transformed to the frequency domain is derived in step M.

In a further step R of preliminary phase P, a mechanical reference state for the apparatus 1 is provided together with respective specifications how a current and actual mechanical state of the apparatus 1 in operation is allowed to defer from the mechanical reference state. For instance, certain reference points at the apparatus 1 and its underlying FEM model 2 may be determined together with intervals for the X, Y and Z directions which shall not be left during operation of the apparatus 1 due to thermal fluctuations.

The main procedural aspects of the of the method S for actively thermomechanically stabilizing the apparatus 1 according to the present invention are given by means of steps S1 to S6.

In step S1 a current thermal state of the apparatus 1 is derived, for instance by obtaining in a sub-step S1-1 thermal data, for instance temperature data by using respective sensing means, for instance temperature sensors 30 attached to or remote from the underlying apparatus 1.

In a following step S2 a current mechanical state of the apparatus 1 is derived. This may be achieved by deriving in step S2-1 mechanical data which are representative for the current mechanical state of the apparatus. The mechanical data is derived from the underlying thermomechanical coupling model in step S2-1a, its accuracy can be subsequently improved with measurements using positions and/or stress sensing means 31 in step S2-1b.

In the next step S3 it is checked whether or not the current mechanical state of the apparatus 1 is comparable to the underlying mechanical reference state.

If the current mechanical state of the apparatus 1 is in compliance with the mechanical reference state no intentional thermal management is necessary and the process returns from step S3 to step S1.

If however the current mechanical state of the apparatus 1 is not in compliance with the underlying mechanical reference state thermomechanical stabilization of the apparatus 1 is required.

Under such circumstances, in step S4 one or a plurality of positions on the apparatus 1 and/or one or a plurality of amounts of heat to be added to or to be removed from the apparatus 1 at said positions are determined. Therefore, the current mechanical state and the current thermal state are input to the underlying thermomechanical coupling model and said positions and amounts of heat are according derived within the model.

In the next step S5 said determined amounts of heat are intentionally and actively added to and/or removed from the apparatus 1 at said determined positions. By said intentional application of heat drifting of the current mechanical state of the apparatus away from the mechanical reference state is reduced, stopped or even reversed and thus compensated.

In the next step S6 it is checked whether or not to further operation of the thermomechanical stabilizing process is requested and/or necessary.

These and further aspects of the present invention will also be described in detail in the following:

General aspects of the invention

The invention relates inter alia to a method for counteracting mechanical and/or dimensional distortions that arise in precise space structures due to mechanical and thermal perturbations.

As technology advances, scientific instruments allow sensing the environment at unprecedented levels of precision. Yet, the consequence of this development is that a quiet and noise-free environment has to be provided by the satellite platform to enable the operation of such precise instrumentation. This presents a technical challenge because the perturbations generated by the satellite itself can prevent the required quiet environment and dimensional stability from being achieved. The invention presents an active control method based on the application of heat that can counteract the effect of low-frequency perturbations in the platform where precise instrumentation is mounted.

This is achieved by measuring and actively modifying the thermal field of the structure so that the perturbing dimensional distortions are balanced.

The current available solution to minimize the extent of low-frequency dimensional distortions onboard spacecraft is based on a passive approach.

The passive approach consists of designing a stable structure inside the spacecraft, often known as optical bench, where precise instrumentation can be mounted. This structure is built with high performance materials that have low coefficients of thermal expansion.

Moreover, it is to the greatest possible extent both thermally and mechanically decoupled from the main spacecraft structure.

This can be achieved with an isostatic mount. With this type of mount it is possible to reduce the transmission of distortions between the main structure and the precise structure.

However, the complexity of this approach increases with the level of stability that is required.

Passive approaches also require frequent calibration measurements to ensure that the dimensional stability is within acceptable limits. Therefore, when implementing this approach, it is also required to develop calibration procedures that enable the estimation of introduced distortions due to perturbation sources.

Stabilization methods that rely on passive techniques have the disadvantage that their performance is inherently limited by the material properties. This means that the level of stabilization that can be attained is always dependent on the magnitude of the perturbation sources. The level of technical complexity that these methods require is proportional to the level of stabilization that must be achieved and therefore they can become unfeasible when high dimensional stability is required.

Moreover, this type of solutions has to be implemented together with an appropriate calibration process. This means that it must be possible to estimate the dimensional distortion at one given moment and recalibrate possible misalignment errors between instruments. Therefore, passive approaches also require sensor elements.

Passive approaches can be effective to neutralize the effect of external sources of distortions, i.e. perturbation sources that are not directly mounted in the precise structure. However, this approach is not useful when the perturbation sources are part of the precise structure, for instance, when these perturbations come from the instruments themselves. Therefore, there are some physical limits to the level of dimensional stability that can be achieved with this approach.

In contrast thereto, the present invention allows a stabilization of misalignments and distance changes that arise between equipment in space structures 1 due to changing mechanical and thermal perturbations. With the presented method it is possible to counteract both the effect of external and internal perturbations. External perturbations are considered to be those that have its origin outside of the precise structure. Internal perturbations are those appearing in the stable platform itself, for instance, due to the dissipation of heat by the instruments 10-1, ..., 10-4 mounted in the structure 1 for instance its platform 50.

The present invention introduces a process that significantly contributes to the improvement of the design of future spacecraft which requires a certain thermo-mechanical stability.

The novel approach will entail a more flexible selection and operations of on-board equipment, for instance its installed devices or instruments 10-1, ..., 10-4, because thermo-mechanical perturbations will no longer be a decisive selection criteria and impose less operational limitations.

The application of the method and simulation models will reduce the development and manufacturing efforts required to construct a dimensionally highly stable platform. In particular, it supports a modularization and platform concept because the active control allows to provide for each application of a module/platform 50 the suitable dimensional stability without changing the basic design, but just adding more or less heaters for distortion control.

The presented method also facilitates the task of controlling the displacements in the structures 1 in opposition of other proposed methods based on the application of forces in the structure. According to the present invention, the structural control is achieved by intentionally applying heat. This can be implemented by installing heaters 20-1, ..., 20-3 in the structure 1 or in a non-intrusive way by using heat radiation sources. Therefore the efforts on redesigning the structure to accommodate the control actuators are reduced.

The present invention yields an improvement with respect to the traditional passive approach for stabilizing space structures 1 against thermo-mechanical distortions.

The theoretical basis for the idea inter alia resides on a frequency domain approach to the thermomechanical problem. From the frequency perspective, it becomes possible to calculate the relation between dimensional distortions at one point or node 7 of the underlying structure 1 and heat input at any other point of the structure 1. This knowledge can be exploited in order to introduce controlled heat inputs to the structure that cancel the thermo-mechanical distortions resulting from thermal perturbations induced by the spacecraft or the environment.

The thermo-mechanical problem is solved considering the heat exchange through conduction and radiation between different parts of the structure. The obtained equations are linearized around an equilibrium state and solved in the frequency domain.

After this step the displacement and heat transfer functions between different points or nodes 7 of the structure 1 can be calculated. With this information it is possible to control the displacement in the structure through applied heat fluxes or radiation sources 20-1, ..., 20-3.

The structure must be equipped with a set of temperature sensors 30 in order to characterize its thermomechanical behavior.

Additionally, strain sensors or displacement sensors 30 can be installed in order to provide further and mechanical or displacement information.

From the temperature measurements it is possible to know how thermal waves propagate through the structure 1.

Heaters 20-1, ..., 20-3 must also be installed to act as sources of controlled thermal waves that when combined with the underlying thermal field result in destructive interference in terms of displacement at some specific points or nodes 7. For each heater 20-1, ..., 20-3 added, an additional degree of freedom in the displacement field can be controlled. With this method specific points or nodes 7 of the structure 1 can be controlled with respect to the spacecraft reference frame but it is also possible to control just the relative movement between different points or nodes 7.

This method also allows the control of the displacements in the structure 1 by applying heat through radiation sources. This enables non-intrusive displacement control of the structure 1.

The presented invention has the potential of significantly improving the level of stability on-board spacecraft. This would enable the realization of space missions with even more demanding stability requirements than current missions. Moreover, the implementation of this active control system would reduce the efforts that are currently required to develop high-performance passively stabilized structures.

In terms of the dimensional stability performance that can be achieved, this invention presents two advantages:

(A) The introduction of the active reduction of thermo-mechanical distortions will allow to implement instruments 10-1, ..., 10-4 with higher precision on spacecraft, which is currently not possible based on a purely passive approach.

(B) Even if instruments 10-1, ..., 10-4 do not require exceptionally high dimensional stability, the possibility of active distortion reduction will reduce the complexity of the thermal and mechanical design of spacecraft and still allow fulfilling the stability requirements.

In terms of the technical implementation of the invention in comparison to alternative methods there exist also advantages:

The method S according to the present invention is configured in order to take into account the influence from radiation exchange. This means that the distortions introduced by external heat radiation sources and from the structure itself are taken into account. This enables the displacement control of the structure by heaters 20-1, ..., 20-3 mounted in the structure 1 as well as by radiation sources at some distance from the structure 1.

Another advantage of this approach is that the displacement field is calculated based on the temperature information that is obtained from temperature sensors. By measuring the temperature at different points it is possible to derive how the structure is thermally oscillating and from there calculate the necessary heat inputs to compensate distortions. Therefore, with this invention thermomechanical distortions can be compensated without using strain or displacement sensors.

There exists the possibility of measuring the temperature field in the structure 1 using an external infrared camera. Combining this knowledge with radiation sources to control the displacement it would be possible to apply the invention with completely non-intrusive methods.

This invention also provides a high degree of flexibility. An additional heater 20-1, ..., 20-3 is required to control an additional degree of freedom in the structure 1. Therefore, it is relatively straightforward to increase the control capabilities by adding heaters 20-1, ..., 20-3 to the structure 1.

This method is based on the implementation of a control loop to counteract the effect of thermal fluctuations. Therefore it is possible to counteract static and deterministic fluctuations, as well as random fluctuations. If the behavior of the expected fluctuations is known and can be characterized, the calculation of the necessary heat input to counteract it can be calculated directly using the transfer functions.

If the perturbations cannot be measured or have a random component, they can still be compensated thanks to the closed-loop feedback.

The alternative to applying this invention up to this moment has been to develop a passively stable structure 1 that reaches the required dimensional stability. However, this option has inherent limitations and does not reach the performance that can be achieved with the presented active control option. It is expected that the presented invention could reach levels of stability that are unattainable at the moment.

Additionally, passively stable approaches become more complex for higher levels of required stability and therefore become unfeasible at some point.

For some specific cases it would be possible to develop a structural control based on strain sensors and piezo actuators. This option could be implemented to develop a local structure control at specific points in the structure 1. It could be feasible for cases in which the behavior of the perturbations is partially known. However, in order to have a global control of the structure it would be necessary to equip the structure with a distributed net of piezo actuators and strain sensors to characterize the structure behavior.

The advantage of using the presented invention is that dimensional distortions are controlled using heaters 20-1, ..., 20-3 and therefore the displacement in one point or node 7 can be controlled with a heater 20-1, ..., 20-3 situated at some distance from it. The heater does not have to be situated at the same point that must be controlled because the heat is naturally transferred within the structure. Moreover, the displacement field can be derived from temperature measurements and therefore strain sensors are not necessary.

The theoretical framework of the present invention is based on a frequency domain approach to the thermo-mechanical problem.

The thermal equations that describe the heat transfer mechanisms within a given apparatus 1 and its structure are considered. These include heat exchange through conduction and radiation.

In some embodiments convection is not considered because the apparatus 1 and its structure are assumed to be in extraterrestrial space. However, convection can be included into the inventive method, too, in case that the method shall to be applied for terrestrial or other planetary applications.

The underlying equations include a non-linear component due to the heat exchange through radiation.

In order to overcome the mathematical difficulties associated with this non-linear relation, the equations are linearized around an equilibrium state that is assumed to be the average state of the structure. This step is sensible because the invention is intended to counteract only small distortions in highly stable structures and therefore large perturbations are not expected.

Following a similar process the equations relating displacements in the structure and thermal stresses are formulated. The thermal stress can be directly calculated based on the thermal field in the structure.

These relations are linear and therefore no further linearization is needed.

A generic case is represented in figure 1. This represents a structure also referred to as a system 1 with a stable platform 50 where the sensitive instruments 10-1, ..., 10-4 are mounted. It is important to notice that the instruments 10-1, ..., 10-4 may act also as perturbation sources due to the heat that they introduce to the structure and the radiation heat they exchange.

Thus figure 1 gives a representation of a generic structure with perturbation sources formed by the instruments 10-1, ..., 10-4.

A key step according to an embodiment of the present invention consists in translating both the thermal and mechanical equations into the frequency domain, in particular by means of a Laplace transform approach. This is in opposition to the traditional approach which consists in solving the equation in the time domain. Once the equations are obtained in the frequency domain, it is possible to calculate transfer functions relating displacement and temperature. It is thus possible to directly calculate the displacement at any point or node 7 of the structure of the apparatus 1 given a heat input at any other point or node 7 of the structure.

These transfer functions are calculated as a function of the frequency s. Therefore, if the frequency, magnitude and position of a thermal perturbation are known, it is possible to directly calculate its impact on the displacement field. The transfer functions are also used to calculate the transfer gain between different points or nodes 7 of the structure of the apparatus 1. This knowledge can be used to place the control heaters 20-1, ..., 20-3 at points of maximum gain, which optimizes the required control power.

With this mathematical framework it is possible to develop a control loop that applies the required heat input to cancel a particular displacement degree of freedom.

It is necessary to distribute a set of temperature sensors 30 in the structure underlying the system 1 in order to characterize it by acquiring thermal data being representative for its thermal state. The stability that can be achieved with this presented method is proportional to the number of temperature sensors 30 because this improves the accuracy of the thermal state estimation. In conjunction with temperature sensors 30, it is also possible to install strain, stress and/or displacement sensors 31 in order to provide mechanical data as additional information.

In order to apply the method according to the present invention it is then necessary to clearly define which degrees of freedom must be stabilized. This is expressed in terms of dimensional displacement in one given three-spatial direction at one specific point or node 7 of the underlying system 1. For each additional degree of freedom that must be stabilized, an additional heater 20-1, ..., 20-3 must be included in the structure 1. The convenient positions for the heaters 20-1, ..., 20-3 can be identified based on the transfer functions calculated as outlined previously. A generic structure with the controllable heat sources is shown in figure 1, too.

Once the structure is equipped with sensors 30 to measure its thermal field and with heaters to modify it, it is possible to implement a control loop that applies the necessary heat inputs to control the displacement field. Using a proportional control based on the temperature measurements is enough to significantly improve the stability that could be achieved with passive methods alone.

For the specific cases in which the perturbation can be characterized, for instance an external perturbation due to some known environmental condition, it is possible to directly calculate the necessary heat input required to counteract it. For these specific cases it would not be necessary to apply the control loop and therefore the sensors 30 would also not be required. However, a thorough characterization of the structure 1 should be conducted to achieve high stability performance.

With this method it is also possible to calculate the necessary constant heat input that is required to compensate static distortions. However, there exists a limitation on the maximum static displacement that can be compensated with a heat source which depends on the maximum temperature change that is acceptable. In case these static distortions do not have a thermal origin, it will be required to equip the structure with strain or displacement sensors in order to measure them and enable its cancellation.

Following the same procedure that has been previously explained it is possible to calculate transfer functions between an external radiation source and the displacement in the structure 1. If this external radiation source is designed to be a controllable heater 20-1, ..., 20-3 it becomes possible to apply the control loop with non-intrusive methods. The control heat is then introduced to the structure by radiation and therefore no contact between heaters and structure is necessary.

Additionally, it is also suggested that an infrared camera could be used as a measuring means in order to measure the thermal field in the structure 1. Under such circumstances according to the present invention a fully non-intrusive structural control technique could be applied.

To exemplify the outlined procedure a comparison between a passively stabilized case and an actively stabilized case is presented in figures 6 to 11. Each of the pairs of figures 6, 7; 8, 9; and 10, 11 shows two instruments 10-1, 10-2 mounted on an upper surface 51 of an underlying platform 50 and a controlled heat source located 20-1 in the region between the instruments 10-1, 10-2. When instrument 10-1 introduces a thermal perturbation in the structure 1, a displacement in instrument 10-2 is induced. This displacement may have an amplitude of approximately 5 $\mu$m. This situation is shown in the pair of figures 8 and 9, together. When a heat control signal is introduced by the control source 20-1, the displacement in the reference point of instrument 10-2 is reduced by a factor of 200 as can be seen in the situation shown in figures 10 and 11 and in particular in the graph of figure 11.

The displacement at point a is controlled in an inertial reference frame using one controlled heat input by operating the control heat source 20-1, within a feedback control loop.

Concrete Example

A simulation framework has been developed in order to prove the feasibility of the presented invention. A baseline concept is presented here with the corresponding simulation results to exemplify how such a control method would work in reality.

The presented structure 1 - also referred to as a system in the sense of the present invention - consists of a plate or platform 50 supported by three bipods 60 where four instruments 10-1, ..., 10-4 are mounted on its upper surface 51 with bipods 60 located on the lower surface thereof.

The bipods 60 may be made of titanium and both the structural plate or platform 50 and the instruments 10-1, ..., 10-4 can be assumed to be made of aluminum. The structure 1 is considered to be in vacuum and, therefore, the only heat exchange is through conduction within the structure and through radiation between the different surfaces and the environment.

A representation of this structure is included in figure 1 which shows the structural concept considered in the presented simulation.

It is assumed that a random thermal perturbation is introduced to the structure by instrument 10-1. This random perturbation is generated by superimposing several periodic signals with random amplitude at random frequencies. One possible sample of the heat introduced by Instrument 10-1 over a period of approximately one day is presented in the graph of figure 5, where the produced heat is shown at the ordinate and as a function of time given at the abscissa.

Thus the graph of figure 5 demonstrates a random thermal perturbation introduced by a first instrument or device 10-1 mounted on a common platform 50.

Due to this perturbation heat applied to the structure 1, dimensional distortions and misalignments arise between the provided four instruments 10-1, ..., 10-4.

The goal of the structural control method according to the present invention in this example is to stabilize the distance between instrument 10-1 and instrument 10-2.

A reference point is defined for each of these instruments, which in figure 1 have been represented by point A and point B.

Figures 3 and 4 indicate examples of possible main dimensions of the structural concept.

The distance between reference points A and B needs to be controlled in the three spatial directions, which means that three degrees-of-freedom of the structure 1 need to be controlled. As a result, it is required to equip the structure with three heat control sources 20-1, 20-2, and 20-3 that will introduce the required heat inputs in order to stabilize the distance A-B.

A critical step in implementing a feedback loop to stabilize the distance A-B is to have an accurate estimation of the distortion field in the structure 1. This could be derived from an accurate thermomechanical model of the structure 1 if the perturbations were known. In the general case, the perturbations will be random and, therefore, it is necessary to equip the structure of the apparatus 1 with sensors 30, 31 from which the distortion field can be estimated. It also critical to perform this estimation with a reasonable amount of sensors 30, 31 and avoiding a large quantity of sensors 30, 31, which would be unrealistic in practice.

The frequency domain approach to the thermomechanical problem in which this invention is based, enables the identification and reconstruction of the thermal field in the whole structure 1 based on a very limited amount of sensor measurements.

Based on the thermal field measurement, the distortion field is then estimated using the thermomechanical model of the structure. In the example presented here, the distortion field estimation is performed based on the measurements of only 20 temperature sensors 30 that are distributed on the surface of the structural plate 50.

It is also important to take into account that in reality temperature sensors 30 are limited in their performance. The accuracy of their measurements is limited and this introduces uncertainty in the distortion field estimation. The example presented here assumes that the temperature measurements have an error of $\pm 0,1$ K, expressed as a $1\sigma$ value.

After estimating the distortion field in real-time it is possible to derive the heat inputs that minimize the distortion expressed in terms of the distance change between points A and B. It is also important to take into account that the heat introduced by the control heat sources 20-1, ..., 20-3 is also not exactly the commanded heat that is calculated by the feedback loop. This is taken into account in this simulation by a random scale factor that is different for each heat control source 20-1, ..., 20-3 and that amplifies or minimizes its effect.

These uncertainty effects are considered in the simulation to calculate and apply the heat control inputs. The obtained performance is presented in figures 12, 13, and 14 which show the distance change that arises in the structure 1 shown in figures 1 to 4 between points A and B in the X, Y and Z direction, respectively. The introduced distortion that would arise under no control is represented by the respective first traces 101, whereas the stable response that is achieved with the presented invention is represented by the respective second traces 102 in the graphs of figures 12, 13, and 14.

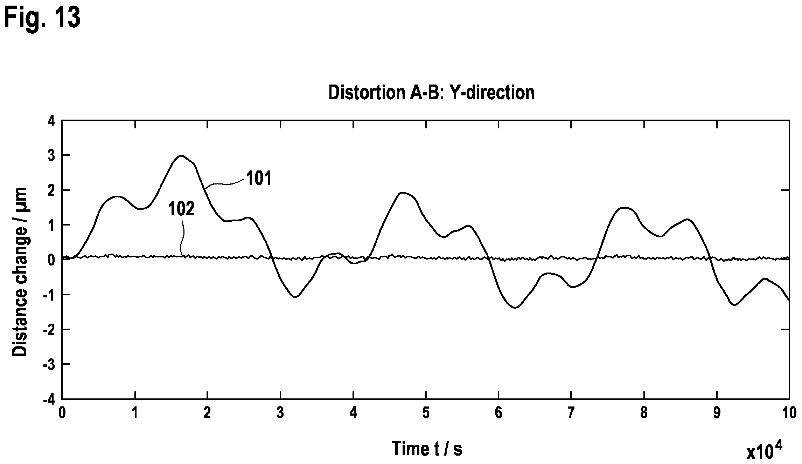

These results exemplify that with the present invention it is possible to achieve structural stability below micrometer levels. In this case, the best performance can be achieved in the Y-direction, which is also the direction at which the largest distortions would arise, reaching almost 3 $\mu$m. A high level of stability is also achieved in the X and Z directions, however, the distortions under no control are smaller in these directions and, therefore, the difference between the controlled and the uncontrolled case is also smaller. There is a threshold below which it is not possible to compensate the distortion and it directly depends on the noise or uncertainty introduced by the temperature sensors. This can be clearly seen in figure 3 and 4 in connection with figure 13. In case more accurate temperature sensors 30 are developed in the future, it will be possible to apply exactly the same process presented here to achieve higher levels of stability.

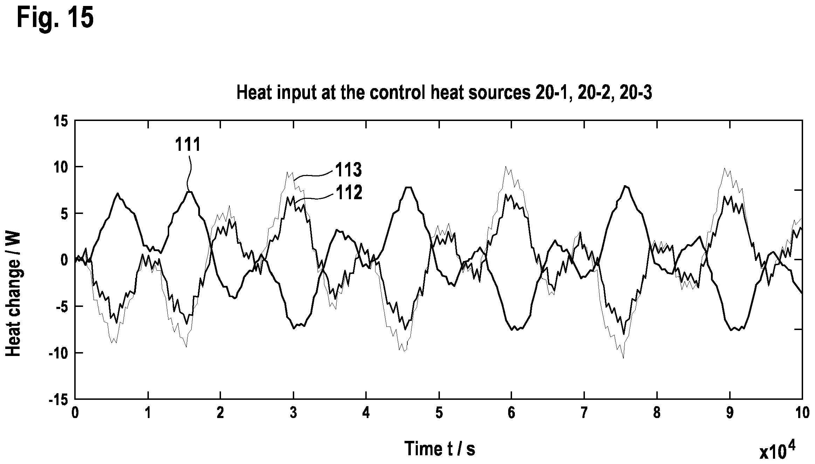

The heat input that is commanded at each heat source 20-1, ..., 20-3 with respect to its corresponding equilibrium state is depicted by the traces 111, 112, 113, respectively, of the graph as shown in figure 15.

Given their location, heat source 20-2 (see trace 112 in the graph of figure 15) and heat source 20-3 (see trace 113 in the graph of figure 15) require a similar behavior, whereas heat source 20-1 (see trace 111 in the graph of figure 15), which is situated between both instruments 10-1 and 10-2, follows the opposite behavior.

This response is based on the generic structural concept presented on this example and, therefore, it is dependent on the location of the heat control sources. Based on the frequency-domain approach on which this invention is based, an optimization procedure in terms of the heat source location can be implemented to minimize control power or to maximize the stability performance.

Modelling

In the following, the modeling aspects and its mathematical and algorithmic background are elucidated.

A 1st part (I) presents the mathematical process to develop a thermomechanical model. This is necessary in order to characterize and to predict the thermal and mechanical behavior of the structure that will be controlled.

A 2nd part (II) presents the derivation of the control laws to calculate the heat control input that is required to compensate structural distortions.

A 3rd third part (III) provides a link between these two aspects and shows how to derive a realistic sensor and actuator strategy that can be implemented to build the invention.

(I) Derivation of the thermomechanical model

A thermomechanical model is required in order to calculate the mechanical response of the structure expressed in terms of displacements given some heat input.

This heat input includes:

- random heat perturbations applied to the underlying structure and

- control heat inputs that are intentionally introduced in order to control the displacement field.

The thermomechanical model is a combination of two models, namely a thermal model and the mechanical model.

The thermal model describes the temperature field - i.e. the temperature distribution - that arises under some heat input.

The mechanical model describes the displacement field - i.e. the distribution of mechanical displacements - resulting from the underlying temperature field.

Several numerical methods are known which are configured in order to derive thermal and mechanical models of structures. According to the present invention and in order to simplify the interface between the thermal and the mechanical model it has been decided to use in both cases the finite element method, in the following denoted by FEM, which is a well-established technique, particularly in the field of structural dynamics.

The idea behind the FEM is to divide the domain of analysis into several finite elements 5. In this case, the whole domain is divided e.g. into hexahedrons 6 is elements 5 as shown in figure 2 modeling in a discrete manner the system 1 shown in figure 1 by means of a FEM model 2.

There is one node 7 at each corner of each hexahedron 6. In the thermal problem each of these nodes 7 has one thermal degree of freedom, namely its temperature, and in the mechanical problem three mechanical degrees of freedom, namely its displacement in each spatial direction X, Y, and Z.

The FEM 2 is aimed and based on solving the thermal and/or mechanical equations only at each node 7. Then, the solution is approximated at the remaining parts of the domain by using assumed shape functions.

Thus in figure 2 the model or FEM 2 gives a meshed domain description of the system 1 by using hexahedral finite elements 5, i.e. hexahedrons 6, which form a cover with accordingly situated and located nodes 7.

1.1 Thermal model

Firstly, the thermal model will be elucidated.

The thermal problem basically solves the partial differential equation given by equation (1) and describing the heat transfer in a spatial region:

$$\rho c_p \frac{\partial T}{\partial t} = -\left( \frac{\partial q_x}{\partial x} + \frac{\partial q_y}{\partial y} + \frac{\partial q_z}{\partial z} \right) + Q \ . \tag{1}$$

The expressions $\rho$ and $c_p$ describe the density of the underlying material and the materials heat capacity, respectively. The three terms $q_x$, $q_y$, and $q_z$ represent the heat flux in each spatial direction X, Y, and Z. The expression Q denotes the volumetric heat generation.

By introducing Fourier's law by means of the relation (2)

$$\vec{q} = -k\nabla T,$$ (2)

where k denotes the thermal conductivity, equation (1) can also be written as given in the following relation (3)

$$\rho c_p \frac{\partial T}{\partial t} = k\nabla^2 T + Q.$$ (3)

Instead of solving the full thermal field at all points of the system 1 shown in figure 1, i.e. instead of determining the continuous field $T(x, y, z)$, the FEM 2 is used and the inventive method is configured to calculate the temperature T at the discrete n nodes 7 formed by the hexahedrons 6 in the mesh of the FEM 2 as shown in figure 2. Thus, the solution can be expressed as a vector $\{T\}$ of discrete nature and finite dimension given by the expression (4):

$$\{T\} = \{T_1 \quad T_2 \quad T_3 \quad T_4 \quad \ldots \quad T_n\}^T.$$ (4)

Applying Galerkin's method of FEM, equation (3) can be written in matrix form as shown by the expression (5):

$$[C]\{\dot{T}\} + [K]\{T\} = [R_q]\{q\} + [R_Q]\{Q\} + [R_r]\{T\}^4 + [R_{r,e}]\{T_e\}^4.$$ (5)

In expression (5) the term *[C]* denotes the heat capacity matrix, *[K]* is the heat conductivity matrix, *[R_q]* denotes the heat flux matrix. The vector {q} multiplied to the heat flux matrix *[R_q]* contains the applied heat fluxes in the structure of the system 1. The term *[R_Q]* is the heat source matrix to which the heat source vector {Q}. The term *[R_r]{T}^4* considers the radiation heat exchange between the surfaces in the structure of the system 1 depending on the temperature *T*. The term *[R_{r,e}]{Te}^4* takes into account the radiation heat exchange with the environment which depends on the environmental temperature $T_e$.

The present invention aims to control small distortions in structures like the system 1 shown in figure 1 that are already designed to be stable. Therefore, it is sensible to assume that only low-magnitude perturbations will be acting on the structure of the system 1. Based on this assumption, it is possible to linearize equation (5) around its equilibrium state using the approximations as given by the expressions (6) to (8):

$$T = T_{eq} + \delta T \quad \longrightarrow \quad T^4 = (T_{eq} + \delta T)^4 \approx T_{eq}^4 + 4T_{eq}^3 \delta T,$$ (6)

$$q = q_{eq} + \delta q,$$ (7)

$$Q = Q_{eq} + \delta Q.$$ (8)

Introducing the expressions (6) to (8) into equation (5) yields equation (9):

$$[C]\{\dot{\delta T}\} + [K]\{\delta T\} - 4[R_r][T_{eq}^3]\{\delta T\} = [R_q]\{\delta q\} + [R_Q]\{\delta Q\}.$$ (9)

After grouping the terms having the factor $\{\delta T\}$ and pre-multiplying by *[C]^{-1}*, the previous expression (9) can be written as shown in equation (10):

$$\{\dot{\delta T}\} + [H_T]\{\delta T\} = [H_q]\{\delta q\} + [H_Q]\{\delta Q\}.$$ (10)

This expression gives the relation between the temperature changes $\delta T$ in the FEM 2 of the structure for the system 1 and the possible heat changes applied to the structure, either in terms of heat flux $\delta q$ or heat source power $\delta Q$.

The transfer functions between these variables can be calculated by diagonalizing equation (10) and transformation into the frequency domain by means of applying Laplace transform to the respective diagonalized terms. This procedure enables the calculation of the temperature change $\delta T$ at any point or node 7 of the FEM 2 of the structure for the system 1 given the heat input $\delta q$, $\delta Q$ at any other point or node 7.

First, the Eigenvectors and Eigenvalues of matrix $[H_T]$ are calculated thereby obtaining $[\Phi]$ the Eigenvector matrix and $[\lambda]$ the Eigenvalue diagonal matrix.

A modal coordinate transformation is now introduced in order to diagonalize equation (10). This transformation from physical coordinates of temperature $\{\delta T\}$ to modal coordinates $\{\tau\}$ is implemented by using expression (11):

$$\{\delta T\} = [\phi]\{\tau\} \qquad (11)$$

Introducing this coordinate transformation of expression (11) into equation (10) yields the following equation (12):

$$[\phi]\{\dot{\tau}\} + [H_T][\phi]\{\tau\} = [H_q]\{\delta q\} + [H_Q]\{\delta Q\} \qquad (12)$$

Pre-multiplying equation (12) by $[\Phi]^{-1}$ gives the following equation (13):

$$[\phi]^{-1}[\phi]\{\dot{\tau}\} + [\phi]^{-1}[H_T][\phi]\{\tau\} = [\phi]^{-1}[H_q]\{\delta q\} + [\phi]^{-1}[H_Q]\{\delta Q\} \qquad (13)$$

It is important to notice that the following expressions

$$[\phi]^{-1}[\phi] = [I] \qquad \text{and} \qquad (14)$$

$$[\phi]^{-1}[H_T][\phi] = [\lambda] \qquad (15)$$

are fulfilled which are both diagonal. Therefore, equation (13) can be rewritten in the form of equation (16) as follows:

$$[I]\{\dot{\tau}\} + [\lambda]\{\tau\} = [\phi]^{-1}[H_q]\{\delta q\} + [\phi]^{-1}[H_Q]\{\delta Q\} \qquad (16)$$

By taking the Laplace transform of the dependent variables, it is possible to express this relation (16) in the frequency domain and to calculate transfer functions between the modal coordinates $\{\tau\}$ and the heat inputs $\{\delta q\}$, $\{\delta Q\}$. The applied Laplace transforms are defined according to the following expressions (17) to (20):

$$\mathcal{L}\{\dot{\tau}(t)\} = s\tau(s) \qquad (17)$$

$$\mathcal{L}\{\tau(t)\} = \tau(s) \qquad (18)$$

$$\mathcal{L}\{\delta q(t)\} = \delta q(s) \qquad (19)$$

$$\mathcal{L}\{\delta Q(t)\} = \delta Q(s) \qquad (20)$$

The term $s = j\omega$ is the complex frequency parameter. Introducing these relations into equation (16) yields the expression (21):

$$s[I]\{\tau(s)\} + [\lambda]\{\tau(s)\} = [\phi]^{-1}[H_q]\{\delta q(s)\} + [\phi]^{-1}[H_Q]\{\delta Q(s)\} \qquad (21)$$

The expression (21) can be written in the following form according to equation (22):

$$\{\tau(s)\} = (s[I] + [\lambda])^{-1}[\phi]^{-1}[H_q]\{\delta q(s)\} + (s[I] + [\lambda])^{-1}[\phi]^{-1}[H_Q]\{\delta Q(s)\} \quad (22)$$

This equation expresses the changes $\{\delta T\}$ in temperature represented by the modal coordinates $\{\tau\}$ in terms of a linear relation with the heat input, i.e. heat fluxes $\{\delta q\}$ and volumetric heat sources $\{\delta Q\}$.

The inverse matrix at the right-hand side of equation (22) can directly be calculated by taking into account that both $[I]$ and $[\lambda]$ are diagonal matrices. The temperature values $\{\delta T\}$ can be calculated from the modal coordinates $\{\tau\}$ in equation (22) using the transformation expressed in equation (11).

Therefore, the transfer function $H_{Tq}$ between the temperature change $\delta T_i$ at an $i^{th}$ node 7 and the heat flux change $\delta q_k$ at a $k^{th}$ surface 5, 6 can be calculated according to expression (23):

$$H_{T_i q_k}(s) = \frac{\delta T_i}{\delta q_k} = \sum_{j=1}^{n_n} \phi_{ij} \frac{A_{jk}}{s + \lambda_j} \quad (23)$$

The terms $A_{jk}$ denote the values at cells $j, k$ of the matrix $[\Phi]^{-1}[H_q]$ and $n_n$ is the number of nodes.

Equivalently, the transfer function $H_{TQ}$ between the temperature change $\delta T_i$ at an $i^{th}$ node 7 and the heat flow change $\delta Q_k$ at a $k^{th}$ source 5, 6 can be calculated according to expression (24):

$$H_{T_i Q_k}(s) = \frac{\delta T_i}{\delta Q_k} = \sum_{j=1}^{n_n} \phi_{ij} \frac{B_{jk}}{s + \lambda_j} \quad (24)$$

The terms $B_{jk}$ denote the value at cells $j,k$ of the matrix $[\Phi]^{-1}[H_Q]$.

The transfer functions $H_{Tq}$ and $H_{TQ}$ according to expressions (23) and (24) can be evaluated at a given frequency s in order to calculate the relation between the temperature change and the heat input change. These transfer functions can be calculated between any combination of nodes 7 in the structure of the system 1.

Hence, the thermal change at any node 7 in the structure of the system 1 triggered by some heat input at any other node 7 can be calculated.

1.2 Mechanical model

Secondly, the mechanical model will be elucidated.

The mechanical model solves the equations of motion expressed for all the nodes 7 in the mesh of the underlying model 2.

Considering a model 2 with a single degree of freedom, the equation of motion can be expressed according to expression (25):

$$m\ddot{u} + c\dot{u} + ku = f(t) \quad (25)$$

The term $m$ denotes the mass of the body, $c$ represents the damping coefficient, $k$ represents the stiffness in the system 1 and $f(t)$ represents the applied mechanical load. The variables $u, \dot{u}, \ddot{u}$ represent displacement, velocity and acceleration, respectively.

When the FEM 2 is applied for a multi-degree of freedom system, the equations of motion can be expressed in matrix form, resulting in equation (26):

$$[M]\{\ddot{u}\} + [C]\{\dot{u}\} + [K]\{u\} = \{F(t)\} \quad (26)$$

with $[M]$ being the mass matrix, $[C]$ denoting the damping matrix, $[K]$ referring to the stiffness matrix and $\{F(t)\}$ describing the mechanical load vector.

In this case, it is assumed that the only mechanical load is the result of the internal thermal strain $\varepsilon_t$, which is defined at each finite element 5, 6 as a function of the coefficient $\alpha$ of thermal expansion of the involved materials and the temperature according to relation (27):

$$\{\varepsilon_t\} = \alpha\{T\}.$$ 

(27)

By taking into account the mechanical properties of the materials, including the Young's modulus $E$ and the Poisson's ratio v, it is possible to calculate the mechanical force resulting from this thermal strain. This relation can be calculated for all the elements 5, 6 in the mesh using the FEM 2 to finally express the applied mechanical load *{F(t)}* as shown according to expression (28):

$$\{F(t)\} = [F_T(\alpha, E, \nu)]\{T\}.$$ 

(28)

The term *[F_T]* expresses the direct relation between temperature *{T}* and force *{F(t)}*.

Considering only the changes with respect to an equilibrium state, it is possible to rewrite equation (26) as shown by expression (29):

$$[M]\{\delta\ddot{u}\} + [C]\{\delta\dot{u}\} + [K]\{\delta u\} = [F_T]\{\delta T\}.$$ 

(29)

Following the equivalent procedure that has been presented for the thermal model, it is possible to diagonalize equation (26) and to transform it to the frequency domain in order to obtain the respective transfer functions $H_{uT}$, $H_{uq}$, and $H_{uQ}$.

First, the Eigenvectors and Eigenvalues of matrix *[K]* are calculated, thereby yielding *[ψ]* the Eigenvector matrix and *[γ]* the Eigenvalue diagonal matrix.

In addition, the following coordinate transformation according to expression (30) is introduced:

$$\{\delta u\} = [\psi]\{\eta\}.$$ 

(30)

Substituting equation (30) into (29), pre-multiplying by *[ψ]⁻¹*, and applying the Laplace transform, the following equation (31) is obtained:

$$s^2[M_d]\{\eta\} + s[C_d]\{\eta\} + [K_d]\{\eta\} = [\psi]^{-1}[F_T]\{\delta T\}.$$ 

(31)

The terms *[M_d]*, *[C_d]* and *[K_d]* are diagonal matrices.

Based on equation (31), it is possible to express the displacement changes *{δu}* as a function of the temperature changes *{δT}* as is shown by the transfer function $H_{uT}$ according to expression (32):

$$H_{u_i T_k}(s) = \frac{\delta u_i}{\delta T_k} = \sum_{j=1}^{3n_n} \psi_{ij} \frac{C_{jk}}{s^2 + c_j s + \gamma_j}.$$ 

(32)

The upper boundary of the summation is $3n_n$ because in the mechanical case there are 3 degrees of freedom at each node 7. The terms $C_{jk}$ represent the cell values of the matrix *[ψ]⁻¹ [F_T]* and $c_j$ denote the values at the diagonal of matrix *[C_d]*.

Expression (32) can be combined with expressions (23) and (24) in order to obtain the thermomechanical transfer functions $H_{uq}$ and $H_{uQ}$ which directly relates displacements and applied heat.

These expressions are given by expressions (33) and (34):

$$H_{u_i q_l}(s) = \frac{\delta u_i}{\delta q_l} = \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k} \quad , \qquad (33)$$

$$H_{u_i Q_l}(s) = \frac{\delta u_i}{\delta Q_l} = \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k} \quad . \qquad (34)$$

The terms $D_{jk}$ denote the values at cells $j,k$ of a matrix $[\psi]^{-1}[F_T][\Phi]$. These transfer functions $H_{uq}$ and $H_{uQ}$ can be evaluated at a given frequency $s$ to quickly calculate the displacement introduced in the structure by a given heat perturbation. The heat perturbation can be expressed in terms of an applied heat flux or an internal heat source.

(II) <u>Calculation of control inputs for distortion control</u>

Based on the thermomechanical model as presented in section (I) above, it is clear that the system describes a multiple-input multiple-output (MIMO) problem.

The multiple inputs correspond to the heat perturbations and the heat applied at different heaters mounted in the structure of the underlying system 1, whereas the outputs are the displacements at several points or nodes 7.

One of the controllers that can be used in order to provide a solution to MIMO problems is the Linear Quadratic Regulator (LQR).

The LQR is advantageous over other options such as variations of a PID controller because it provides a systematic mathematical procedure to calculate control gains in order to optimize a cost function.

The control framework that may be used in connection with the present invention is based on controlling displacements by changing the temperatures in the structure of the underlying system 1.

Another way to understand this process is to say that the temperatures are controlled such that the displacements at some particular points are canceled.

Therefore, the system 1 that is controlled is ultimately the one described by the thermal model in equation (10), which can be written as according to expression (35):

$$\{\delta \dot{T}\} = [A]\{\delta T\} + [B]\{\delta q\} . \qquad (35)$$

Considering that $\{\delta q\}$ includes control heat and perturbation heat, it is also possible to write the equation (35) according to the following expression (36):

$$\{\delta \dot{T}\} = [A]\{\delta T\} + [B_c]\{\delta q_c\} + [B_{pert}]\{\delta q_{pert}\} . \qquad (36)$$

The LQR is based on the calculation of the control input using a proportional gain according to the expression (37):

$$\{\delta q_c\} = -[K_{LQR}]\{\delta T\} . \qquad (37)$$

The proportional gain $[K_{LQR}]$ is calculated by minimizing the quadratic cost function which is defined according to the expression (38):

$$J = \int_0^\infty \left( \{\delta T\}^T [Q]\{\delta T\} + \{\delta q_c\}^T [R]\{\delta q_c\} \right) dt . \qquad (38)$$

The terms $[Q]$ and $[R]$ denote two matrices that introduce weight factors to the values in $\{\delta T\}$ and $\{\delta q_c\}$. The

matrix *[R]* can be assumed to be a multiple of the identity matrix if the same weight is assigned to all the heaters (actuators) in the system 1. The matrix *[Q]* must take into account that the temperatures at different nodes 7 must have different relative weights so that the global distribution of temperatures cancels the displacement at some points.

In order to build the matrix *[Q]*, it is necessary to know the relation between displacement and temperature. This relation is expressed by equation (29) of the mechanical or FEM model 2.

At this point, the following mathematical process is simplified by assuming that the relation between displacement and temperature is quasi-static.

This assumption is justified by the fact that thermal perturbations take place at much lower frequencies to those at which inertia and damping terms influence the displacement. This means that the inertia and damping terms of equation (29) are assumed to have a negligible contribution, and thus, the equation can be rewritten according to expression (39):

$$[K]\{\delta u\} = [F_T]\{\delta T\} \qquad (39)$$

or equivalently according to expression (40):

$$\{\delta u\} = [K]^{-1}[F_T]\{\delta T\} = [\mathcal{F}_T]\{\delta T\}. \qquad (40)$$

The matrix *[Q]* can now be calculated from the relations contained in the matrix $[\mathcal{F}_T]$.

If, for instance, only the displacement at a $k^{th}$ node 7 needs to be controlled, then the matrix row $[\mathcal{F}_{T,k}]$ corresponding to the displacement $\delta u_k$ can be used to calculate the weight factor matrix *[Q]* according to expression (41)

$$[Q] = \{\mathcal{F}_{T,k}\}^T \{\mathcal{F}_{T,k}\}. \qquad (41)$$

Additional rows of the matrix $[\mathcal{F}_T]$ can be considered to control the displacement at several nodes 7.

Once the matrices *[R]* and *[Q]* have been defined, the proportional gain is calculated based on the LQR method according to expression (42):

$$[K_{LQR}] = [R]^{-1}[B_c][P]. \qquad (42)$$

The term *[P]* denotes a matrix configured to minimize the cost function defined according to equation (38) and can be calculated by solving the following Ricatti equation (43):

$$[A]^T[P] + [P][A] - [P][B_c][R]^{-1}[B_c]^T[P] + [Q] = 0. \qquad (43)$$

Based on this approach, the closed-loop dynamics are finally expressed as shown expression (44):

$$\{\dot{\delta T}\} = ([A] - [B_c][K_{LQR}])\{\delta T\} + [B_{pert}]\{\delta q_{pert}\}. \qquad (44)$$

This control loop works under ideal conditions. Thus, it is assumed that the temperatures are known at all times for all the nodes 7 in the model 2 and that the sensors and actuators have an ideal behavior. However, this will never be the case in reality because the number of available sensors is significantly lower than the number of nodes in the model. Additionally, there is some uncertainty in the behavior of both sensors and actuators. Therefore, it is necessary to develop a sensor and actuator strategy in order to enable the implementation of the presented control loop.

(III) Sensor and actuator strategy

This section outlines the main mathematical aspects behind the modeling of the sensor and actuator strategies in order to prove the feasibility of the invention's concept.

III.1 Sensor strategy

As it has been shown in section II, the main limitation of the presented control framework is that it requires the knowledge of the temperatures at all the nodes 7 in the model 2. It is unfeasible to equip the structure of the underlying system 1 with such a large number of sensors and, therefore, a mathematical strategy is proposed to partially overcome this limitation.

The temperature field at the entire structure of the underlying system 1 can be estimated from a limited amount of sensor measurements by combining a process of modal expansion with a Kalman filter.

The thermal model and thermal transfer functions presented in section 1.1 have been derived based on a modal representation of the thermal problem. This is expressed e.g. by a relation (45) between temperature coordinates $\delta T$ and modal coordinates $\tau$

$$\{\delta T\} = [\phi]\{\tau\} \qquad (45)$$

Each column in the matrix $[\Phi]$ can be understood as a vector representing a modal shape. This is basically a fundamental shape in which the thermal fluctuations are transferred within the structure of the underlying system 1.

Based on this equation, the temperature response $\{\delta T\}$ is expressed as a linear combination of the modal shapes, i.e., the columns in the matrix $[\Phi]$.

An important characteristic of this representation is that the thermal response is frequently dominated by a few number of modes. In other words, most of the weight of the response is distributed among only a few modes, the rest of the modes only have individually a very small contribution to the response.

Thus, equation (45) can be rewritten, at the expense of introducing a small error, considering only a smaller set of the columns in matrix $[\Phi]$, namely according to the expression (46):

$$\{\delta T\} = [\phi]\{\tau\} \approx [\phi_r]\{\tau_r\} \qquad (46)$$

In order to identify which columns of the matrix $[\Phi]$ should be considered in order to build matrix $[\Phi_r]$ it is necessary to take into account the location of the expected perturbations. Perturbations arising at different points in the structure underlying the structure 1 excite different thermal modes.

By knowing the location of the main perturbation sources, even if their particular behavior is unknown, it is possible to know which thermal modes describe the thermal response and, therefore, the matrix $[\Phi]$ can be reduced. Once the matrix $[\Phi]$ has been reduced, the vector $\{\tau\}$ of modal coordinates must also be reduced accordingly.

By mounting temperature sensors 20-1, ..., 20-3 in the structure underlying the system 1, it is possible to measure some of the temperature values in the vector $\{\delta T\}$. This set of measurements shall be represented by the term $\{\delta T_{sensors}\}$.

Considering only the rows of matrix $\{\Phi_r\}$ corresponding to the sensor positions, it is possible to write an approximate expression (47) for the measurements $\{\delta T_{sensors}\}$:

$$\{\delta T_{sensors}\} \approx [\phi_{rs}]\{\tau_r\} \qquad (47)$$

By combining equation (47) with equation (46), the temperature vector $\{\delta T\}$ can approximatively be expressed according to equation (48):

$$\{\delta T\} \approx [\phi_r][\phi_{rs}]^{-1}\{\delta T_{sensors}\} \qquad (48)$$

With this procedure it is possible to obtain a reasonable estimation of the entire temperature field, based on the assumption that it is described by only the most relevant thermal modes. The contribution of the remaining modes is neglected and, therefore, an error is introduced. This error will be worsened in reality due to sensor inaccuracies and noise.

Thus, a standard Kalman filter may be implemented in combination with the presented modal expansion method.

The Kalman filter takes into account repeated measurements obtained over time by the sensors and combines them with the expected values estimated from the mathematical model, in order to minimize the temperature estimation error.

The thermal equation (36) can be written in discrete form as

$$\{\delta T\}_n = [A_n]\{\delta T\}_{n-1} + [B_{c,n}]\{\delta q_c\}_{n-1} + [B_{pert,n}]\{\delta q_{pert}\}_{n-1} \qquad (49)$$

But it can generally not be evaluated because the term $\delta q_{pert}$ is unknown. The Kalman filter provides an estimation of the temperature vector $\{\hat{\delta T}\}_n$ at some time step by combining the estimation $\{\hat{\delta T}\}_{n-1}$ at the previous time step with the sensor measurements and with the temperature value estimated by the thermal model. It performs this estimation in a two-step process according to expression (50) and (51). A first estimation is obtained using the known variables in equation (49)

$$\{\bar{\delta T}\}_n = [A_n]\{\delta T\}_{n-1} + [B_{c,n}]\{\delta q_c\}_{n-1} \qquad (50)$$

And it is subsequently corrected using equation (51)

$$\{\hat{\delta T}\}_n = \{\bar{\delta T}\}_n + [M]\left(\{\delta T\} - \{\bar{\delta T}\}_n\right) \qquad (51)$$

The term *[M]* denotes the estimation gain and it is calculated according to the Kalman filter theory and as a function of the expected noise in the sensors 30 and the expected level of perturbations.

As it has been presented, only some cells in the vector *{δT}* are measured by sensors 30. Therefore, the Kalman filter is modified with the previously presented modal expansion indicated by equation (48) which results in expression (52):

$$\{\hat{\delta T}\}_n = \{\bar{\delta T}\}_n + [M]\left([\phi_r][\phi_{rs}]^{-1}\{\delta T_{sensors}\} - \{\bar{\delta T}\}_n\right) \qquad (52)$$

This is the final expression that is used in order to estimate the temperature field at each time step and to calculate the required heat inputs for the control as outlined in section (II).

III.2 Actuator strategy

One of the most relevant aspects related to the actuator strategy is to choose their location. There exists some inherent constraints regarding their location due to the structural design. From the available positions where the actuators can be mounted, it is possible to perform an optimization, for instance, in terms of the required heat power for control. This can be performed based on the thermomechanical functions according to expressions (33) and (34). The gain *G* of these functions can be evaluated at different frequencies by calculating the norm of the transfer function, namely according to the following expressions (53) and (54), namely

$$G(s) = \|H_{uq}(s)\| \quad \text{and} \qquad (53)$$

$$G(s) = \|H_{uQ}(s)\|, \qquad (54)$$

and depending on the case.

Based on these gain functions it is possible to identify which locations require less heat power to influence the displacement at some specific node 7.

A similar procedure can also be implemented to optimize in terms of the overall distortion that is introduced in the structure to achieve displacement control at one point or node 7.

These results are only valid at specific frequencies and, therefore, some information on the perturbation frequency is needed to apply them reliably.

(IV) Additional aspects of sensor and actuator strategy

As elucidated in detail above, one of the key aspects of the present invention is to develop a sensor strategy that enables the estimation of the thermal field based on a limited number of measurements. This, in turn allows the estimation of the mechanical state and the calculation of the necessary heat inputs to correct the present distortions.

Apart from the calculation of the global thermal field, the presented procedure allows also the identification of optimal positions where the sensors should be mounted in order to minimize estimation errors.

In order to complete a control loop it is also necessary to implement an actuator strategy. This includes a procedure for identifying suitable or best positions where the actuators should be located in order to minimize a given variable such as the control power or the global distortion.

IV.1 <u>Sensor strategy and location</u>

The main limitation of the presented control framework may be based on a linear quadratic regulator (LQR) and may require the knowledge of the temperatures at all the nodes in the model. It is unfeasible to equip the structure with such a large number of sensors without affecting its mechanical integrity.

Thus and according to a further aspect of the present invention, a strategy is proposed to partially overcome this limitation.

The temperature field at the entire structure can be estimated from a limited amount of sensor measurements by making use of the modal representation of the thermal problem that has been presented to derive the thermal transfer functions. The modal representation expresses the thermal field in the structure using the modal coordinates given by the expression (55)

$$\{\delta T\} = [\phi]\{\tau\} \tag{55}$$

Each column in the matrix $[\varphi]$ can be understood as a vector representing a modal shape. Each cell in one of these vectors corresponds to the normalized magnitude of the thermal fluctuation at each node in the model. Each thermal mode is basically a fundamental shape in which the thermal fluctuations are transferred within the structure. Based on this equation, the temperature response $\{\delta T\}$ is expressed as a linear combination of the modal shapes, i.e., the columns in the matrix $[\varphi]$.

An important characteristic of this representation is that the thermal response is frequently dominated by a few number of modes. In other words, most of the weight of the response is distributed among only a few modes, the rest of the modes only have individually a very small contribution to the response. Thus, equation (55) can be rewritten, at the expense of introducing a small error, considering only a smaller set of the columns in matrix $[\varphi]$,

$$\{\delta T\} = [\phi]\{\tau\} \approx [\phi_r]\{\tau_r\} \tag{56}$$

In order to identify which columns of $[\varphi]$ should be considered to build the matrix $[\varphi_r]$ it is necessary to take into account the location of the expected perturbations. Perturbations arising at different points in the structure excite different thermal modes. By knowing the location of the main perturbation sources, even if their particular behavior is unknown, it is possible to know which thermal modes have more weight in the induced thermal response and, therefore, the matrix can be reduced. Once the matrix $[\varphi]$ has been reduced, the vector $\{\tau\}$ must also be reduced accordingly.

By mounting temperature sensors in the structure it is possible to measure some of the temperature values in vector $\{\delta T\}$, this set of measurements is represented by $\{\delta T_{sensors}\}$. Considering only the rows of matrix $[\varphi_r]$ corresponding to the sensor positions, it is possible to write

$$\{\delta T_{sensors}\} \approx [\phi_{rs}]\{\tau_r\}. \tag{57}$$

By combining the expressions (56) and (57) temperature vector can be expressed according to expression (58):

$$\{\delta T\} \approx [\phi_r][\phi_{rs}]^{-1}\{\delta T_{sensors}\}. \tag{58}$$

The entity $[\varphi_{rs}]$ is not necessarily square matrix and thus, instead of calculating its inverse $[\varphi_{rs}]^{-1}$ it might be necessary to calculate a pseudoinverse thereof , for instance, the Moore-Penrose pseudoinverse.

With the presented procedure it is possible to obtain a reasonable estimation of the entire temperature field, based on the assumption that it is described by only the most relevant thermal modes. The contribution of the remaining modes is neglected and, therefore, an error is introduced.

This error can be partially reduced with the proper selection of the sensor locations. Based on the thermal modes that are selected to construct the reduced matrix *[φ]*, i.e. *[φᵣ]*, the sensors should be located at the vicinity of those nodes where the selected thermal modes reach its maximum amplitude.

Thus, if the thermal excursions at one node induced by one particular thermal mode have a larger range, they will be more easily detected by the sensor. If instead the sensors are located at those positions where the thermal mode induces only an almost negligible thermal fluctuation, the thermal signal will not be properly measured due to the inherent noise.

It must be taken into account that the noise in the sensor measurements is an additional source of errors. These errors can be partially attenuated by implementing a filter to the obtained measurements. In the presented example it is suggested to use a Kalman filter to this purpose, which combines the obtained measurements with the mathematical model of the described system.

IV.2 Actuator strategy

One of the most relevant aspects related to the actuator strategy is to choose their location. There exist some inherent constraints regarding their location due to the structural design. From the available positions where the actuators can be mounted, it is possible to perform an optimization of a defined variable such as the required heat control power or the global introduced distortions. This can be performed based on the thermomechanical functions.

First, the gain $G$ of these functions for each node in the model can be evaluated at different frequencies by calculating the norm of the transfer functions. The gain at one given frequency of the thermomechanical function that expresses the displacement change $\delta u_i$ at an i$^{th}$ node given a heat flux change $\delta q_l$ at a l$^{th}$ surface can be calculated according to expression (59)

$$G_{u_i q_l}(s) = \|H_{u_i q_l}(s)\| = \left\| \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k} \right\|. \tag{59}$$

and for the displacement change $\delta u_i$ at an i$^{th}$ node given a heat flow change $\delta Q_l$ at a l$^{th}$ source can be calculated according to expression (60)

$$G_{u_i Q_l}(s) = \|H_{u_i Q_l}(s)\| = \left\| \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k} \right\|. \tag{60}$$

These expressions can be evaluated for all the possible l heat source positions to identify the best or optimal actuator positions for a given condition.

For instance, if the condition is to minimize the control power, the actuators should be situated at those locations where the gain field described by the previous equations reaches maximum values. Thus, a given heat input would translate into a maximum displacement change at the controlled node.

It is also possible to optimize for variables other than the control power. For instance, actuators can be located at positions that minimize the overall distortion introduced at the structure due to the control effort.

In case there is only one actuator with $\delta Q_1$ in the system, the overall distortion in the structure can be defined according to expression (61)

$$f(\delta Q_1) = \delta Q_1 \sum_{i=1}^{n_n} G_{u_i Q_1}(s). \tag{61}$$

From all the possible positions where actuator 1 can be situated, it is possible to numerically check which one provides the lowest value of f($\delta Q_1$), thus minimizing the global impact in the structure.

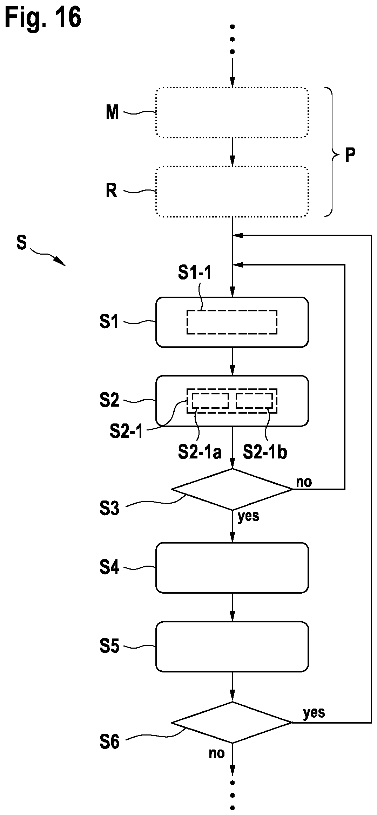

In addition to the foregoing description of the present invention, for an additional disclosure explicit reference is taken to graphic representation of figures 1 to 16.

**List of reference signs**

| | |
|---|---|
| 1 | system, structure |
| 2 | FEM, model, grid model of the system, structure, apparatus |
| 5 | FEM element, element, grid element |
| 6 | hexahedron |
| 7 | node |
| 10-1 | 1st device, instrument |
| 10-2 | 2nd device, instrument |
| 10-3 | 3rd device, instrument |
| 10-4 | 4th device, instrument |
| 20-1 | 1st heat source |
| 20-2 | 2nd heat source |
| 20-3 | 3rd heat source |
| 25 | energy/power supply unit |
| 26 | control and supply line |
| 27 | control unit |
| 28 | monitoring and control line |
| 29 | monitoring and control line |
| 30 | sensing means , temperature sensor |
| 31 | sensing means , mechanical and/or stress sensor |
| 50 | platform, support |
| 51 | upper side/surface |
| 52 | lower side/surface |
| 60 | bipod |
| 100 | system for actively thermomechanically controlling an apparatus 1 |
| 101 | trace for conventionally/uncontrolled structure/system |
| 102 | trace for structure/system 1 controlled according to the present invention |
| 111 | trace for heat source 20-1 |
| 112 | trace for heat source 20-1 |
| 113 | trace for heat source 20-1 |
| 115 | trace of heat perturbation for device 10-1 |
| 121 | trace |
| 122 | trace |
| 123 | trace |
| 124 | trace |
| 125 | trace |
| a | reference point |
| A | reference point |
| B | reference point |
| P | preliminary/preparatory phase |
| M | deriving/constructing thermomechanical coupling model |
| R | providing mechanical reference state |
| S | (control) method according to the present invention |
| S1 | determining a current thermal state of the apparatus 1 |
| S1-1 | acquiring thermal/temperature data |
| S2 | determining a current mechanical state of the apparatus 1 |
| S2-1 | acquiring mechanical data |
| S2-1a | acquiring mechanical data from thermomechanical coupling model |
| S2-1b | acquiring mechanical data by measurement |
| S3 | comparing the current mechanical state with mechanical reference state |
| S4 | determining positions/amounts of heat |
| S5 | adding and/or removing heat to/from the apparatus 1 |
| S6 | checking continuation condition |

**Claims**

1. Method (S) for actively thermomechanically stabilizing an apparatus (1) which in particular is or comprises an extraterrestrial or space-related manufacturing, measurement and/or experimental unit, the method comprising steps of:

    (a) determining (S1) a current thermal state of the apparatus (1),
    (b) determining (S2) a current mechanical state of the apparatus (1),
    (c) comparing (S3) said current mechanical state of the apparatus (1) with a predetermined mechanical reference state of the apparatus (1),
    (d) determining (S4)

        (d1) one or a plurality of positions on said apparatus (1) and/or
        (d2) amounts of heat to be added to or to be removed from said apparatus (1) at said positions, and

    (e) actively adding and/or removing (S5) said determined amounts of heat to or from the apparatus (1), respectively, at said determined positions,
    wherein said step of determining (S4) said positions and/or amounts of heat
    (f) is performed such that said current mechanical state of the apparatus (1) remains in or returns to a predetermined vicinity of said mechanical reference state of the apparatus (1),
    (g) is based on a result of said step of comparing (S3) said current mechanical state of the apparatus (1) with said predetermined mechanical reference state, and
    (h) is based on a predetermined thermomechanical coupling model of the apparatus (1) being descriptive for a coupling and/or a correspondence between a mechanical state and a thermal state of the apparatus (1).

2. Method (S) according to claim 1,
    wherein said step of determining (S1) said current thermal state comprises

        - acquiring (S1-1) thermal data and in particular temperature data being representative for said current thermal state and in particular
        - using one or a plurality of temperature sensing means, temperature sensors (30) and/or infrared cameras, and

    wherein in particular a number and/or positions of thermal or temperature data acquiring and/or sensing locations on the apparatus (1) are determined from said thermomechanical coupling model, the evaluation of which being based on already acquired thermal or temperature data.

3. Method (S) according to any one of the preceding claims, wherein

        - said step of determining (S2) said current mechanical state comprises determining (S2-1) mechanical data and
        - said mechanical data are representative for said current mechanical state and/or for positions and/or for mechanical stress of one or a plurality of portions of the apparatus (1).

4. Method (S) according to any one of the preceding claims,
    wherein said current mechanical state and its mechanical data are determined (S2-1)

        - based (S2-1a) on said thermomechanical coupling model, the evaluation of which being based on already acquired thermal, temperature and/or mechanical data and/or
        - based (S2-1b) on measurements using one or a plurality (i) of position and/or stress sensing means (31) or sensors mechanically coupled to the apparatus (1) and/or (ii) imaging means and image evaluation remote from the apparatus (1), and

    wherein in particular a number and/or positions of mechanical data acquiring and/or sensing locations on the apparatus (1) are determined from said thermomechanical coupling model, the evaluation of which being based on already acquired thermal, temperature and/or mechanical data.

5. Method (S) according to any one of the preceding claims,
    wherein in said step of adding and/or removing (S5) said amounts of heat to or from the apparatus (1), respectively, at one least heat source (20-1, ..., 20-3) is thermally coupled to a corresponding position at said apparatus (1) and accordingly operated in order to add and/or remove the corresponding amount of heat to/from said position at least by one of heat conduction and heat radiation coupling.

**6.** Method (S) according to any one of the preceding claims, wherein said thermomechanical coupling model is configured in order

- to describe heat exchange within the apparatus (1) and/or between the apparatus (1) and its environment at least through heat conduction and heat radiation and its temporal development as a temporarily developing thermal state of the apparatus (1), and in particular
- to solve the heat transfer equation for the apparatus (1) based on nodes (7) for elements (5) of a FEM model (2) of the apparatus (1) with the thus discretized heat transfer equation being solved (i) in a vicinity of a thermal equilibrium state of the apparatus (1), (ii) for small thermal perturbations and/or (iii) in linearized, diagonalized and Laplace transformed form in the frequency domain.

**7.** Method (S) according to claim 6, wherein based on said thermomechanical coupling model a first thermal transfer function $H_{Tq}$ between the temperature change $\delta T_i$ at an $i^{th}$ node (7) and the heat flux change $\delta q_k$ at a $k^{th}$ surface (5, 6) according to expression (A)

$$H_{T_i q_k}(s) = \frac{\delta T_i}{\delta q_k} = \sum_{j=1}^{n_n} \phi_{ij} \frac{A_{jk}}{s + \lambda_j}$$

(A)

and a second thermal transfer function $H_{TQ}$ between the temperature change $\delta T_i$ at an $i^{th}$ node 7 and the heat flow change $\delta Q_k$ at a $k^{th}$ source (5, 6) according to expression (B)

$$H_{T_i Q_k}(s) = \frac{\delta T_i}{\delta Q_k} = \sum_{j=1}^{n_n} \phi_{ij} \frac{B_{jk}}{s + \lambda_j}$$

(B)

are calculated and used, wherein

- the terms $A_{jk}$ denote the values at cells $j,k$ of a matrix $[\Phi]^{-1}[H_q]$,
- the terms $B_{jk}$ denote the value at cells $j,k$ of a matrix $[\Phi]^{-1}[H_Q]$,
- $n_n$ denotes the number of nodes (7) of the underlying model,
- s is the Laplace frequency variable,
- the matrices $[\Phi]^{-1}[H_q]$ and $[\Phi]^{-1}[H_Q]$ are formed by the diagonal Eigenvector matrix $[\Phi]$ in the discretized heat transfer equation for the apparatus (1) having components $\Phi_{ij}$ in the cell denoted by $i, j$,
- the matrices $[H_q]$ and $[H_Q]$ are the matrices of coupling coefficients with respect to the heat flux changes $\delta q_k$ and to the heat source changes $\delta Q_k$, respectively, in the discretized heat transfer equation for the apparatus (1), and
- $\lambda_j$ are the diagonal components of the diagonal Eigenvalue matrix $\lambda$ in the discretized heat transfer equation for the apparatus (1).

**8.** Method (S) according to any one of the preceding claims, wherein said thermomechanical coupling model is configured in order

- to describe corresponding mechanical properties within the apparatus (1), in particular in terms of positions, displacements and/or mechanical strains or stresses at distinct points and/or regions of the apparatus (1) and its temporal development as a temporarily developing mechanical state of the apparatus (1), and in particular
- to solve the mechanical equation of motion for the apparatus (1) based on nodes (7) for elements (5) of a FEM model (2) of the apparatus (1) with the thus discretized mechanical equation of motion being solved in diagonalized and Laplace transformed form in the frequency domain.

**9.** Method (S) according to claims 7 and 8, wherein based on said thermomechanical coupling model a first thermo-

mechanical transfer function $H_{uq}$ between the displacement change $\delta u_i$ at an $i^{th}$ node (7) and the heat flux change $\delta q_l$ at a $l^{th}$ surface (5, 6) according to expression (C)

$$H_{u_i q_l}(s) = \frac{\delta u_i}{\delta q_l} = \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k} \tag{C}$$

and a second thermomechanical transfer function $H_{uQ}$ between the displacement change $\delta u_i$ at an $i^{th}$ node (7) and the heat flow change $\delta Q_l$ at a $l^{th}$ source (5, 6) according to expression (D)

$$H_{u_i Q_l}(s) = \frac{\delta u_i}{\delta Q_l} = \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k} . \tag{D}$$

are calculated and used, wherein additionally

- the terms $D_{jk}$ denote the values at cells $j,k$ of a matrix $[\psi]^{-1}[F_T][\Phi]$,
- the terms $\xi_j$ denote the value at cells $j,k$ of a matrix $[D_d]$,
- the matrix $[\psi]^{-1}[F_T][\Phi]$ is formed by the diagonal Eigenvector matrix $[\psi]$ of the discretized equation of motion of the apparatus (1) having components $\psi_{ij}$ in the cell denoted by $i, j$, and the diagonal Eigenvector matrix $[\Phi]$ of the discretized thermal equation of the apparatus (1) having components $\Phi_{ij}$ in the cell denoted by $i, j$,
- the matrix $[F_T]$ is the matrix of coefficients expressing the relation between temperature and force in the discretized equation of motion of the apparatus (1),
- the matrix $[D_d]$ is a diagonal matrix and describes the linear coupling to the Laplace frequency s in the Laplace transformed discretized equation of motion of the apparatus (1), and
- $\gamma_j$ are the diagonal components of the diagonal Eigenvalue matrix $\gamma$ in the discretized equation of motion for the apparatus (1).

10. Method (S) according to claim 9, wherein the number, the positions and/or the amounts of heat to be applied by a plurality of heat sources (20-1, ..., 20-3) to be coupled to the underlying apparatus (1) is determined by evaluating said first and second thermomechanical transfer functions, its normal or absolute value and/or within a closed feedback loop.

11. Control unit (27) for a thermomechanical control system (100) and configured (i) in order to actively thermomechanically control an apparatus (1) which in particular is or comprises an extraterrestrial or space-related manufacturing, measurement and/or experimental unit and (ii) in order to carry out a method according to any one of claims 1 to 10.

12. Thermomechanical control system (100) configured to actively thermomechanically control an apparatus (1) which in particular is or comprises an extraterrestrial or space-related manufacturing, measurement and/or experimental unit, the system (100) comprising:

   - one or a plurality of heat sources (20-1, ..., 20-3) or a coupling thereto,
   - an energy supply unit (25) and
   - a control unit (27) - in particular according to claim 11 - configured in order

      - to control the operation of the heat sources (20-1, ..., 20-3) and/or of the energy supply unit (25) and/or
      - to carry out and/or to be used in a method according to any one of claims 1 to 10.

13. Apparatus (1), comprising:

   - a support (50),
   - at least one device (10-1, ..., 10-4) mechanically coupled to the support (50) and
   - a thermomechanical control system (100) according to claim 12 and/or configured in order to thermomechanically control the apparatus (1) by performing a method according to any one of claims 1 to 10.

**14.** Apparatus (1) according to claim 13, which is or comprises an extraterrestrial or space-related manufacturing, measurement and/or experimental unit.

**Patentansprüche**

**1.** Verfahren (S) zum aktiven thermomechanischen Stabilisieren einer Vorrichtung (1), die insbesondere eine extraterrestrische oder weltraumbezogene Fertigungs-, Mess- und/oder Versuchseinheit ist oder umfasst, wobei das Verfahren folgende Schritte umfasst:

(a) Ermitteln (S1) eines aktuellen thermischen Zustands der Vorrichtung (1),
(b) Ermitteln (S2) eines aktuellen mechanischen Zustands der Vorrichtung (1),
(c) Vergleichen (S3) des aktuellen mechanischen Zustands der Vorrichtung (1) mit einem vorbestimmten mechanischen Referenzzustand der Vorrichtung (1),
(d) Ermitteln (S4)

(d1) einer oder einer Vielzahl von Positionen an der Vorrichtung (1) und/oder
(d2) Wärmemengen, die der Vorrichtung (1) an den Positionen zuzuführen oder von dieser abzuführen sind, und

(e) aktives Zuführen und/oder Abführen (S5) der ermittelten Wärmemengen zur bzw. von der Vorrichtung (1) an den ermittelten Positionen,
wobei der Schritt des Ermittelns (S4) der Positionen und/oder Wärmemengen
(f) so durchgeführt wird, dass der aktuelle mechanische Zustand der Vorrichtung (1) in einer vorbestimmten Nähe des mechanischen Referenzzustands der Vorrichtung (1) bleibt oder zu diesem zurückkehrt,
(g) auf einem Ergebnis des Schritts des Vergleichens (S3) des aktuellen mechanischen Zustands der Vorrichtung (1) mit dem vorbestimmten mechanischen Referenzzustand basiert, und
(h) auf einem vorbestimmten thermomechanischen Kopplungsmodell der Vorrichtung (1) basiert, das eine Kopplung und/oder Entsprechung zwischen einem mechanischen Zustand und einem thermischen Zustand der Vorrichtung (1) beschreibt.

**2.** Verfahren (S) nach Anspruch 1,
wobei der Schritt des Ermittelns (S1) des aktuellen thermischen Zustands umfasst

- Erfassen (S1-1) von thermischen Daten und insbesondere von Temperaturdaten, die für den aktuellen thermischen Zustand repräsentativ sind, und insbesondere
- Verwenden einer oder einer Vielzahl von Temperaturabtasteinrichtungen, Temperatursensoren (30) und/oder Infrarotkameras, und

wobei insbesondere eine Anzahl und/oder Positionen von thermischen oder Temperatur-Daten erfassenden und/oder abtastenden Stellen an der Vorrichtung (1) aus dem thermomechanischen Kopplungsmodell ermittelt werden, dessen Auswertung auf bereits erfassten thermischen oder Temperatur-Daten basiert.

**3.** Verfahren (S) nach einem der vorhergehenden Ansprüche, wobei

- der Schritt des Ermittelns (S2) des aktuellen mechanischen Zustands das Ermitteln (S2-1) mechanischer Daten umfasst und
- die mechanischen Daten für den aktuellen mechanischen Zustand und/oder für Positionen und/oder für eine mechanische Belastung eines oder einer Vielzahl von Abschnitten der Vorrichtung (1) repräsentativ sind.

**4.** Verfahren (S) nach einem der vorhergehenden Ansprüche,
wobei der aktuelle mechanische Zustand und dessen mechanische Daten ermittelt werden (S2-1)

- basierend (S2-1a) auf dem thermomechanischen Kopplungsmodell, dessen Evaluierung auf bereits erfassten thermischen, Temperatur- und/oder mechanischen Daten basiert, und/oder
- basierend (S2-1b) auf Messungen unter Verwendung einer oder eine Vielzahl (i) von Positions- und/oder Belastungsabtasteinrichtungen (31) oder Sensoren, die mechanisch mit der Vorrichtung (1) gekoppelt sind, und/oder (ii) einer von der Vorrichtung (1) entfernten Bildgebungseinrichtung und Bildauswertung, und

wobei insbesondere eine Anzahl und/oder Positionen von mechanischen Datenerfassungs- und/oder Abtaststellen an der Vorrichtung (1) aus dem thermomechanischen Kopplungsmodell ermittelt werden, dessen Evaluierung auf bereits erfassten thermischen, Temperatur- und/oder mechanischen Daten basiert.

5. Verfahren (S) nach einem der vorhergehenden Ansprüche,
wobei im Schritt des Zuführens und/oder Abführens (S5) der Wärmemengen zur bzw. von der Vorrichtung (1) zumindest eine Wärmequelle (20-1, ..., 20-3) mit einer entsprechenden Position an der Vorrichtung (1) thermisch gekoppelt und dementsprechend betrieben wird, um die entsprechende Wärmemenge zur/von der Position durch Wärmeleitungs- und/oder Wärmestrahlungskopplung zuzuführen und/oder abzuführen.

6. Verfahren (S) nach einem der vorhergehenden Ansprüche, wobei das thermomechanische Kopplungsmodell konfiguriert ist zum

- Beschreiben des Wärmeaustauschs im Innern der Vorrichtung (1) und/oder zwischen der Vorrichtung (1) und deren Umgebung zumindest durch Wärmeleitung und Wärmestrahlung und dessen zeitliche Entwicklung als sich temporär entwickelnden thermischen Zustand der Vorrichtung (1), und insbesondere
- Lösen der Wärmeübertragungsgleichung für die Vorrichtung (1) basierend auf Knoten (7) für Elemente (5) eines FEM-Modells (2) der Vorrichtung (1), wobei die so diskretisierte Wärmeübertragungsgleichung (i) in der Nähe eines thermischen Gleichgewichtszustandes der Vorrichtung (1), (ii) für kleine thermische Störungen und/oder (iii) in linearisierter, diagonalisierter und Laplace-transformierter Form im Frequenzbereich gelöst wird.

7. Verfahren (S) nach Anspruch 6, wobei basierend auf dem thermomechanischen Kopplungsmodell eine erste Wärmeübertragungsfunktion $H_{Tq}$ zwischen der Temperaturänderung $\delta T_i$ an einem i-ten Knoten (7) und der Wärmestromänderung $\delta T_k$ an einer k-ten Oberfläche (5, 6) gemäß Ausdruck (A)

$$H_{T_i q_k}(s) = \frac{\delta T_i}{\delta q_k} = \sum_{j=1}^{n_n} \phi_{ij} \frac{A_{jk}}{s + \lambda_j} \qquad (A)$$

und einer zweiten Wärmeübertragungsfunktion $H_{TQ}$ zwischen der Temperaturänderung $\delta T_i$ an einem i-ten Knoten 7 und der Wärmestromänderung $\delta Q_k$ an einer k-ten Quelle (5, 6) gemäß Ausdruck (B)

$$H_{T_i Q_k}(s) = \frac{\delta T_i}{\delta Q_k} = \sum_{j=1}^{n_n} \phi_{ij} \frac{B_{jk}}{s + \lambda_j} \qquad (B)$$

berechnet und verwendet werden, wobei

- die Terme $A_{jk}$ die Werte an den Zellen $j,k$ einer Matrix $[\Phi]^{-1}[H_q]$ bezeichnen,
- die Terme $B_{jk}$ den Wert an den Zellen $j,k$ einer Matrix $[\Phi]^{-1}[H_q]$ bezeichnen,
- $n_n$ die Anzahl der Knoten (7) des zugrunde liegenden Modells bezeichnet,
- s die Laplace-Frequenzvariable ist,
- die Matrizen $[\Phi]^{-1}[H_q]$ und $[\Phi]^{-1}[H_Q]$ durch die diagonale Eigenvektor-Matrix $[\Phi]$ in der diskretisierten Wärmeübertragungsgleichung für die Vorrichtung (1) mit Komponenten $\Phi_{ij}$ in der mit $i, j$ bezeichneten Zelle gebildet werden,
- die Matrizen [Hq] und [HQ] die Matrizen der Kopplungskoeffizienten bezüglich der Wärmestromänderungen $\delta q_k$ bzw. der Wärmequellenänderungen $\delta Q_k$ in der diskretisierten Wärmeübertragungsgleichung für die Vorrichtung (1) sind, und
- $\lambda_j$ die Diagonalkomponenten der diagonalen Eigenwert-Matrix $\lambda$ in der diskretisierten Wärmeübertragungsgleichung für die Vorrichtung (1) sind.

8. Verfahren (S) nach einem der vorhergehenden Ansprüche, wobei das thermomechanische Kopplungsmodell konfiguriert ist zum

- Beschreiben entsprechender mechanischen Eigenschaften im Innern der Vorrichtung (1), insbesondere in Form von Positionen, Verschiebungen und/oder mechanischen Beanspruchungen oder Belastungen an bestimmten Punkten und/oder Bereichen der Vorrichtung (1) und deren zeitliche Entwicklung als einen sich temporär entwickelnden mechanischen Zustand der Vorrichtung (1), und insbesondere

- Lösen der mechanischen Bewegungsgleichung für die Vorrichtung (1) basierend auf Knoten (7) für Elemente (5) eines FEM-Modells (2) der Vorrichtung (1), wobei die so diskretisierte mechanische Bewegungsgleichung in diagonalisierter und Laplace-transformierter Form im Frequenzbereich gelöst wird.

9. Verfahren (S) nach Anspruch 7 und 8, wobei basierend auf dem thermomechanischen Kopplungsmodell eine erste thermomechanische Übertragungsfunktion $H_{uq}$ zwischen der Verschiebungsänderung $\delta u_i$ an einem i-ten Knoten (7) und der Wärmestromänderung $\delta q_l$ an einer I-ten Oberfläche (5, 6) gemäß Ausdruck (C)

$$H_{u_i q_l}(s) = \frac{\delta u_i}{\delta q_l} = \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k} \qquad (C)$$

und eine zweite thermomechanische Übertragungsfunktion $H_{uQ}$ zwischen der Verschiebungsänderung $\delta u_i$ an einem i-ten Knoten (7) und der Wärmestromänderung $\delta Q_l$ an einer I-ten Quelle (5, 6) gemäß Ausdruck (D)

$$H_{u_i Q_l}(s) = \frac{\delta u_i}{\delta Q_l} = \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k} \qquad (D)$$

berechnet und verwendet werden, wobei zusätzlich

- die Terme $D_{jk}$ die Werte an den Zellen $j,k$ einer Matrix $[\psi]^{-1}[F_T][\Phi]$ bezeichnen,
- die Terme $\xi_j$ den Wert an den Zellen $j,k$ einer Matrix $[D_d]$ bezeichnen,
- die Matrix $[\psi]^{-1}[F_T][\Phi]$ durch die diagonale Eigenvektor-Matrix $[\psi]$ der diskretisierten Bewegungsgleichung der Vorrichtung (1) mit Komponenten $\psi_{ij}$ in der mit $i, j$ bezeichneten Zelle, und die diagonale Eigenvektor-Matrix $[\Phi]$ der diskretisierten thermischen Gleichung der Vorrichtung (1) mit Komponenten $\Phi_{ij}$ in der mit $i, j$ bezeichneten Zelle gebildet wird,
- die Matrix $[F_T]$ die Matrix der Koeffizienten ist, welche die Beziehung zwischen einer Temperatur und Kraft in der diskretisierten Bewegungsgleichung der Vorrichtung (1) ausdrückt,
- die Matrix $[D_d]$ eine Diagonal-Matrix ist und die lineare Kopplung an die Laplace-Frequenz s in der Laplace-transformierten diskretisierten Bewegungsgleichung der Vorrichtung (1) beschreibt, und
- $\gamma_j$ die Diagonalkomponenten der diagonalen Eigenwert-Matrix $\gamma$ in der diskretisierten Bewegungsgleichung für die Apparatur (1) sind.

10. Verfahren (S) nach Anspruch 9, wobei die Anzahl, die Positionen und/oder die Wärmemengen, die von einer Vielzahl von mit der darunterliegenden Vorrichtung (1) zu koppelnden Wärmequellen (20-1, ..., 20-3) aufzubringen sind, durch Evaluieren der ersten und zweiten thermomechanischen Übertragungsfunktionen, ihres Normal- oder Absolutwerts und/oder innerhalb einer geschlossenen Rückkopplungsschleife ermittelt wird.

11. Steuereinheit (27) für ein thermomechanisches Steuersystem (100), die dazu konfiguriert ist, (i) eine Vorrichtung (1) aktiv thermomechanisch zu steuern, die insbesondere eine extraterrestrische oder weltraumbezogene Fertigungs-, Mess- und/oder Versuchseinheit ist oder umfasst, und (ii) ein Verfahren nach einem der Ansprüche 1 bis 10 durchzuführen.

12. Thermomechanisches Steuersystem (100), das zur aktiven thermomechanischen Steuerung einer Vorrichtung (1) konfiguriert ist, die insbesondere eine extraterrestrische oder weltraumbezogene Fertigungs-, Mess- und/oder Versuchseinheit ist oder umfasst, wobei das System (100) umfasst:

- eine oder eine Vielzahl von Wärmequellen (20-1, ..., 20-3) oder eine Kopplung mit diesen,
- eine Energieversorgungseinheit (25), und

- eine Steuereinheit (27) - insbesondere nach Anspruch 11 -, die dazu konfiguriert ist zum

    - Steuern des Betriebs der Wärmequellen (20-1, ..., 20-3) und/oder der Energieversorgungseinheit (25) und/oder
    - Ausführen und/oder Verwenden eines Verfahrens nach einem der Ansprüche 1 bis 10.

**13.** Vorrichtung (1), umfassend:

    - einen Träger (50),
    - zumindest eine Einrichtung (10-1, ..., 10-4), die mit dem Träger (50) mechanisch verbunden ist, und
    - ein thermomechanisches Steuersystem (100) welche nach Anspruch 12 und/oder zum thermomechanischen Steuern der Vorrichtung (1) durch Ausführen eines Verfahrens nach einem der Ansprüche 1 bis 10 konfiguriert ist.

**14.** Vorrichtung (1) nach Anspruch 13, die eine extraterrestrische oder weltraumbezogene Fertigungs-, Mess- und/oder Versuchseinheit ist oder umfasst.


**Revendications**

**1.** Procédé (S) de stabilisation thermomécanique active d'un appareil (1) qui est ou comprend notamment une unité extraterrestre ou de fabrication liée à l'espace, de mesure et/ou d'essai,
le procédé comprenant les étapes consistant :

    (a) à déterminer (S1) un état thermique actuel de l'appareil (1),
    (b) à déterminer (S2) un état mécanique actuel de l'appareil (1),
    (c) à comparer (S3) ledit état mécanique actuel de l'appareil (1) à un état de référence mécanique prédéterminé de l'appareil (1),
    (d) à déterminer (S4)

        (d1) une ou plusieurs position(s) sur ledit appareil (1) et/ou
        (d2) des quantités de chaleur à ajouter ou à retirer dudit appareil (1) auxdites positions, et

    (e) à ajouter et/ou retirer activement (S5) lesdites quantités déterminées de chaleur à ou depuis l'appareil (1), respectivement, auxdites positions déterminées,
    dans lequel ladite étape de détermination (S4) desdites positions et/ou desdites quantités de chaleur
    (f) est effectuée de sorte que ledit état mécanique actuel de l'appareil (1) reste ou retourne à un voisinage prédéterminé dudit état de référence mécanique de l'appareil (1),
    (g) est basée sur un résultat de ladite étape de comparaison (S3) dudit état mécanique actuel de l'appareil (1) avec ledit état de référence mécanique prédéterminé, et
    (h) est basée sur un modèle de couplage thermomécanique prédéterminé de l'appareil (1) qui décrit un couplage et/ou une correspondance entre un état mécanique et un état thermique de l'appareil (1).

**2.** Procédé (S) selon la revendication 1,
dans lequel ladite étape de détermination (S1) dudit état thermique actuel comprend

    - l'acquisition (S1-1) de données thermiques et notamment de données de température qui représentent ledit état thermique actuel et
    - l'utilisation d'un ou de plusieurs moyen(s) de détection de température, capteur(s) de température (30) et/ou caméra(s) infrarouge(s), et

dans lequel notamment un nombre et/ou de positions d'acquisition de données thermiques ou de température et/ou d'emplacements de détection sur l'appareil (1) est/sont déterminé(e)(s) à partir dudit modèle de couplage thermomécanique, dont l'évaluation étant basée sur des données thermiques ou de température déjà acquises.

**3.** Procédé (S) selon l'une quelconque des revendications précédentes, dans lequel

    - ladite étape de détermination (S2) dudit état mécanique actuel comprend la détermination (S2-1) de données mécaniques et

- lesdites données mécaniques représentent ledit état mécanique actuel et/ou des positions et/ou une contrainte mécanique d'une ou de plusieurs partie(s) de l'appareil (1).

4. Procédé (S) selon l'une quelconque des revendications précédentes, dans lequel ledit état mécanique actuel et ses données mécaniques sont déterminés (S2-1)

- sur la base (S2-1a) dudit modèle de couplage thermomécanique, dont l'évaluation étant basée sur des données thermiques, de température et/ou mécaniques déjà acquises et/ou
- sur la base (S2-1b) de mesures utilisant un ou plusieurs élément(s) parmi (i) des moyens de détection de position et/ou de contrainte (31) ou des capteurs couplés mécaniquement à l'appareil (1) et/ou (ii) des moyens d'imagerie et d'évaluation d'image à distance de l'appareil (1), et

dans lequel notamment un nombre et/ou des positions d'emplacements d'acquisition et/ou de détection de données mécaniques sur l'appareil (1) est/sont déterminé(e)(s) à partir dudit modèle de couplage thermomécanique, dont l'évaluation étant basée sur des données thermiques, de température et/ou mécaniques déjà acquises.

5. Procédé (S) selon l'une quelconque des revendications précédentes, dans lequel, dans ladite étape d'ajout et/ou de retrait (S5) desdites quantités de chaleur à ou depuis l'appareil (1), respectivement, au moins une source de chaleur (20-1, ..., 20-3) est thermiquement couplée à une position correspondante au niveau dudit appareil (1) et actionnée en conséquence afin d'ajouter et/ou de retirer la quantité correspondante de chaleur à/depuis ladite position au moins par l'un des couplages de conduction de chaleur et de rayonnement de chaleur.

6. Procédé (S) selon l'une quelconque des revendications précédentes, dans lequel ledit modèle de couplage thermomécanique est configuré

- pour décrire un échange de chaleur à l'intérieur de l'appareil (1) et/ou entre l'appareil (1) et son environnement au moins par conduction de chaleur et rayonnement de chaleur et son développement temporaire en tant qu'état thermique en développement temporaire de l'appareil (1), et notamment
- pour résoudre l'équation de transfert de chaleur pour l'appareil (1) sur la base de nœuds (7) pour des éléments (5) d'un modèle FEM (2) de l'appareil (1) avec l'équation de transfert de chaleur ainsi discrétisée étant résolue (i) au voisinage d'un état d'équilibre thermique de l'appareil (1), (ii) pour des petites perturbations thermiques et/ou (iii) sous forme soumise à une linéarisation, une diagonalisation et une transformée de Laplace dans le domaine fréquentiel.

7. Procédé (S) selon la revendication 6, dans lequel, sur la base dudit modèle de couplage thermomécanique, une première fonction de transfert thermique $H_{Tq}$ entre le changement de température $\delta T_i$ en un ième nœud (7) et le changement de flux de chaleur $\delta q_k$ en une kième surface (5, 6) selon l'expression (A)

$$H_{T_i q_k}(s) = \frac{\delta T_i}{\delta q_k} = \sum_{j=1}^{n_n} \phi_{ij} \frac{A_{jk}}{s + \lambda_j}$$

$$(A)$$

et une deuxième fonction de transfert thermique $H_{TQ}$ entre le changement de température $\delta T_i$ en un ième nœud 7 et le changement de flux de chaleur $\delta Q_k$ à une kième source (5, 6) selon l'expression (B)

$$H_{T_i Q_k}(s) = \frac{\delta T_i}{\delta Q_k} = \sum_{j=1}^{n_n} \phi_{ij} \frac{B_{jk}}{s + \lambda_j}$$

$$(B)$$

sont calculées et utilisées, où

- les termes $A_{jk}$ désignent les valeurs aux cellules j,k d'une matrice $[\Phi]^{-1}[H_q]$,
- les termes $B_{jk}$ désignent la valeur aux cellules j,k d'une matrice $[\Phi]^{-1}[H_Q]$,
- $n_n$ désigne le nombre de nœuds (7) du modèle sous-jacent,
- s est la variable fréquentielle de Laplace,

- les matrices $[\Phi]^{-1}[H_q]$ et $[\Phi]^{-1}[H_Q]$ sont formées par la matrice diagonale de vecteurs propres $[\Phi]$ dans l'équation de transfert de chaleur discrétisée pour l'appareil (1) ayant des composantes $[\Phi]_{ij}$ dans la cellule désignée par i,j,
- les matrices $[H_q]$ et $[H_Q]$ sont les matrices de coefficients de couplage par rapport aux changements de flux de chaleur $\delta q_k$ et aux changements de source de chaleur $\delta Q_k$, respectivement, dans l'équation de transfert de chaleur discrétisée pour l'appareil (1), et
- $\lambda_j$ sont les composantes diagonales de la matrice diagonale de valeurs propres À dans l'équation de transfert de chaleur discrétisée pour l'appareil (1).

8. Procédé (S) selon l'une quelconque des revendications précédentes, dans lequel ledit modèle de couplage thermomécanique est configuré

- pour décrire des propriétés mécaniques correspondantes à l'intérieur de l'appareil (1), notamment en termes de positions, déplacements et/ou sollicitations ou contraintes mécaniques en des points et/ou régions distinct(e)s de l'appareil (1) et son développement temporaire en tant qu'état mécanique en développement temporaire de l'appareil (1), et notamment
- pour résoudre l'équation mécanique du mouvement pour l'appareil (1) sur la base de nœuds (7) pour des éléments (5) d'un modèle FEM (2) de l'appareil (1) avec l'équation de mouvement mécanique ainsi discrétisée étant résolue sous forme soumise à une diagonalisation et une transformée de Laplace dans le domaine fréquentiel.

9. Procédé (S) selon les revendications 7 et 8, dans lequel, sur la base dudit modèle de couplage thermomécanique, une première fonction de transfert thermomécanique $H_{uq}$ entre le changement de déplacement $\delta u_i$ en un ième nœud (7) et le changement de flux de chaleur $\delta q_i$ en une lième surface (5, 6) selon l'expression (C)

$$H_{u_i q_l}(s) = \frac{\delta u_i}{\delta q_l} = \sum_{j=1}^{3n_n} \sum_{k=1}^{n_n} \psi_{ij} \frac{D_{jk}}{s^2 + \xi_j s + \gamma_j} \frac{A_{kl}}{s + \lambda_k} \tag{C}$$

et une deuxième fonction de transfert thermomécanique $H_{uQ}$ entre le changement de déplacement $\delta u_i$ en un ième nœud (7) et le changement de flux de chaleur $\delta Q_i$ en une lième source (5, 6) selon l'expression (D)

$$H_{u_i Q_l}(s) = \frac{\delta u_i}{\delta Q_l} = \sum_{j=1}^{3n_n} \sum_{k=1}^{n_n} \psi_{ij} \frac{D_{jk}}{s^2 + \xi_j s + \gamma_j} \frac{B_{kl}}{s + \lambda_k} \tag{D}$$

sont calculées et utilisées, où en plus

- les termes $D_{jk}$ désignent les valeurs aux cellules j,k d'une matrice $[\psi]^{-1}[F_T][\Phi]$,
- les termes $\xi_j$ désignent la valeur aux cellules j,k d'une matrice $[D_d]$,
- la matrice $[\psi]^{-1}[F_T][\Phi]$ est formée par la matrice diagonale de vecteurs propres $[\psi]$ de l'équation de mouvement discrétisée de l'appareil (1) ayant des composantes $\psi_{ij}$ dans la cellule désignée par i,j, et la matrice diagonale de vecteurs propres $[\Phi]$ de l'équation thermique discrétisée de l'appareil (1) ayant des composantes $\Phi_{ij}$ dans la cellule désignée par i,j,
- la matrice $[F_T]$ est la matrice de coefficients exprimant la relation entre température et la force dans l'équation de mouvement discrétisée de l'appareil (1),
- la matrice $[D_d]$ est une matrice diagonale et décrit le couplage linéaire à la fréquence de Laplace s dans l'équation de mouvement discrétisée soumise à une transformée de Laplace de l'appareil (1), et
- $\gamma_j$ sont les composantes diagonales de la matrice diagonale de valeurs propres $\gamma$ dans l'équation de mouvement discrétisée pour l'appareil (1).

10. Procédé (S) selon la revendication 9, dans lequel le nombre, les positions et/ou les quantités de chaleur à appliquer par une pluralité de sources de chaleur (20-1, ..., 20-3) à coupler à l'appareil sous-jacent (1) est/sont déterminé(e)(s) en évaluant lesdites première et deuxième fonctions de transfert thermomécanique, sa valeur normale ou absolue et/ou dans une boucle de rétroaction fermée.

11. Unité de commande (27) pour un système de commande thermomécanique (100) et configurée (i) pour commander de manière activement thermomécanique un appareil (1) qui est ou comprend notamment une unité extraterrestre ou de fabrication liée à l'espace, de mesure et/ou d'essai et (ii) pour mettre en œuvre un procédé selon l'une quelconque des revendications 1 à 10.

12. Système de commande thermomécanique (100) configuré pour commander de manière activement thermomécanique un appareil (1) qui est ou comprend notamment une unité extraterrestre ou de fabrication liée à l'espace, de mesure et/ou d'essai, le système (100) comprenant :

    - une ou plusieurs source(s) de chaleur (20-1, ..., 20-3) ou un couplage à celui-ci,
    - une unité d'alimentation en énergie (25) et
    - une unité de commande (27) - notamment selon la revendication 11 - configurée

        - pour commander le fonctionnement des sources de chaleur (20-1, ..., 20-3) et/ou de l'unité d'alimentation en énergie (25) et/ou
        - pour mettre en œuvre et/ou être utilisée dans un procédé selon l'une quelconque des revendications 1 à 10.

13. Appareil (1), comprenant :

    - un support (50),
    - au moins un dispositif (10-1, ..., 10-4) mécaniquement couplé au support (50) et
    - un système de commande thermomécanique (100) selon la revendication 12 et/ou configuré pour commander de manière thermomécanique l'appareil (1) en effectuant un procédé selon l'une quelconque des revendications 1 à 10.

14. Appareil (1) selon la revendication 13, qui est ou comprend une unité extraterrestre, de fabrication liée à l'espace, de mesure et/ou d'essai.

**Fig. 1**

EP 3 502 711 B1

Fig. 2

Fig. 3

Fig. 4

EP 3 502 711 B1

37

Fig. 5

Heat perturbation - Instrument 10-1

EP 3 502 711 B1

**Fig. 6**

**Fig. 7**

EP 3 502 711 B1

**Fig. 8**

**Fig. 9**

Temperature variation at point a in instrument 10-2 / K

Time t / s

40

Fig. 10

Fig. 11

**Fig. 12**

Distortion A-B: X-direction

Distance change / µm

Time t / s

x10⁴

101

102

Fig. 13

Distortion A-B: Y-direction

EP 3 502 711 B1

EP 3 502 711 B1

**Fig. 14**

Distortion A-B: Z-direction

Fig. 15

# Fig. 16

**EP 3 502 711 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2343586 A1